# EUROPÄISCHE PATENTANMELDUNG

(11) **EP 2 911 080 A1**
(43) Veröffentlichungstag der Anmeldung: **26.08.2015**
(21) Anmeldenummer: 14179658.1
(22) Anmeldetag: 04.08.2014
(51) Int. Cl.: G06F 21/57

(54) **Verfahren und Vorrichtung zum sicheren Initialisieren eines Computers**

(30) Priorität: 24.02.2014 EP 14156304
(71) Anmelder: Fraunhofer-ges. zur Förderung der Angewandten Forschung E.V., 80686 München (DE)
(72) Erfinder: Wessel, Sascha, 91052 Erlangen (DE); Horsch, Julian, 80789 München (DE)

(57) **Zusammenfassung**

Die Erfindung bezieht sich auf ein Verfahren zur Absicherung der Initialisierung eines Computers durch einen verifizierten softwarebasierten Vertrauensanker. Der softwarebasierte Vertrauensanker wird als Teilprozess während der Initialisierung aufgerufen und berechnet auf Grundlage eines Aufgabe-Antwort-Verfahrens eine Antwort die durch einen Verifizierer verifiziert wird. Bei erfolgreicher Verifikation gibt der Verifizierer den Zugriff auf in ihm gespeicherte Geheimnisse oder Operationen die Geheimnisse nutzen frei. Die Erfindung bezieht sich ebenso auf eine Vorrichtung zum Verifizieren des softwarebasierten Vertrauensankers auf Basis des beschriebenen Verfahrens.

## Beschreibung

Die vorliegende Erfindung bezieht sich auf ein Verfahren und eine Vorrichtung zur Absicherung des Bootprozesses eines Computers.

Computer sind vielfältigen Angriffen ausgesetzt, die nicht nur auf der Ebene der Anwendungsprogramme oder des Betriebssystems ansetzen, sondern auch auf den Bootprozess abzielen können. Da vom Bootprozess alle weiteren Prozesse abhängen, stellt ein erfolgreicher Angriff auf dieser Ebene eine besonders große Gefahr dar. Insbesondere greifen viele andere Schutzmechanismen erst ab der Ebene des Betriebssystems, sodass andere Verteidigungsmaßnahmen gegen Angriffe auf den Bootprozess ergriffen werden müssen.

Es sind Lösungen bekannt, bei denen beispielsweise durch das BIOS (Basic Input/Output System)-Warnungen angezeigt werden, falls sich der Inhalt des Bootsektor seit dem letzten Bootprozess geändert hat und so der Computeranwender prüfen kann, ob die Änderung legitim war oder das ungewünschte Ergebnis eines erfolgreichen Angriffs ist.

Der Initialisierungsprozess eines Computers, das heißt der Start- oder Bootprozess, besteht zumeist aus einer Abfolge/Kette mehrerer Teilprozesse die von einem Prozessor/Mikrocontroller abgearbeitet werden. Zum Start des Computersystems führt der Prozessor des Computers den Programmcode des ersten Tellprozesses, zum Beispiel einer Firmware, ausgehend von einer vorgegeben Speicheradresse aus. Typischerweise ist der Programmcode für diesen ersten Teilprozess in einem Speicherbereich abgelegt, auf den ausschließlich der Hersteller vollständigen Zugriff hat, das heißt nur der Hersteller kann diesen Bereich beliebig beschreiben und ggf. lesen. Dies wird zum Beispiel dadurch erreicht, dass der Programmcode des ersten Teilprozesses in einem Nur-Lesespeicher-ROM (Read-Only Memory) - oder programmierbaren Nur-Lesespeicher - PROM (Programmable Read-Only Memory) - abgelegt ist. Gewöhnlich startet der erste Teilprozess als nächste Stufe im Bootprozess einen nächsten Teilprozess. Bei diesem zweiten Teilprozess kann es sich beispielsweise um einen Urlader - häufig als Bootloader bezeichnet - handeln, der nicht mehr in einem nur dem Hersteller vollständig zugänglichen Speicherbereich abgelegt ist. Dadurch ist es anderen Parteien, neben dem Hersteller möglich, auf den Bootprozess Einfluss zu nehmen, um beispielsweise dem Anwender des Computers verschiedene Betriebssysteme zur Auswahl anzubieten. Der zweite Teilprozess startet einen nächsten Teilprozess, durch den beispielsweise das Betriebssystem geladen wird.

Der beschriebene mehrstufige Bootprozess, bei dem ein Teilprozess einen weiteren Teilprozess in der Kette ohne Verifikation startet, weist Sicherheitsprobleme auf. Zwar ist der in einem zugangsbeschränkten Nur-Lesespeicher abgelegte Programmcode für den ersten Teilprozess vor Manipulation geschützt, aber nicht der in dem außerhalb des zugangsbeschränkten Speicherbereiches liegende Programmcode für die weiteren Teilprozesse. Dieser ist Manipulationen zugänglich und kann zu einem, auf unterster Ebene kompromittierten Computersystem führen.

Aus dem Stand der Technik sind Lösungen bekannt, um die Sicherheit des Bootprozesses zu verbessern.

So ist aus US 09/165,316 ein gesicherter Bootprozess bekannt, bei dem die Kette aus Teilprozessen durch asymmetrische Kryptographie (Public Key Cryptography) gesichert wird und so ein sicherer Status am Ende des Bootprozesses erreicht wird. Ausgangspunkt ist ein Vertrauensanker, ein vor Manipulationen geschützter Programmcode des ersten Tellprozesses, mit zusätzlichen vor Manipulation geschützt abgespeicherten digitalen Signaturen, Schlüsseln, Zertifikaten. Der gewöhnlich ungeschützte Übergang von einem Teilprozess zum nächsten Teilprozess, durch jump- und/oder call-Aufrufe, wird bei US 09/165,316 um eine Integritätsprüfung erweitert. Diese Verifikation beruht auf asymmetrischer Kryptographie und kryptographischen Hashes und erfolgt entlang einer Kette von der niedrigsten Ebene bis zur höchsten Ebene, von Teilprozess zu Teilprozess, bis zum Abschluss des Bootprozesses in einem gesicherten Status. Auf diese Weise entsteht eine vertrauenswürdige Kette von Teilprozessen, bei der die Vertrauenswürdigkeit der im manipulationssicheren Speicher hinterlegten Signaturen, Schlüssel, Zertifikate des Vertrauensankers auf die gesamte Kette ausgedehnt wird. Bei mangelnder Integrität schlägt US 09/165,316 einen Mechanismus zur Wiederherstellung der Integrität vor.

Im Stand der Technik hat die vertrauenswürdige Kette von Teilprozessen ihren Ursprung in einem Speicher, der ausschließlich der Kontrolle des Hardwareherstellers unterliegt oder einer ausgewählten anderen Partei, die Zugriff auf diesen manipulationssicheren Speicher hat. Sollte diese Partei nicht vertrauenswürdig sein, kann nachträglich keine vertrauenswürdige Kette von Teilprozessen geschaffen werden. Auch für den Fall, dass der manipulationssichere Speicher eine Schwachstelle aufweist oder ein lesegeschützter Bereich für private Schlüssel lesbar ist, ist die nachträgliche Schaffung einer vertrauenswürdigen Kette von Teilprozessen unmöglich.

Der Erfindung liegt die Aufgabe zugrunde, flexibel einen vertrauenswürdigen Ursprung, einen Vertrauensanker, für eine vertrauenswürdige Kette von Teilprozessen eines Bootprozesses/Initialisierungsprozesses, zu schaffen.

Diese Aufgabe wird durch ein Verfahren nach Anspruch 1 und eine Vorrichtung nach Anspruch 12 und ein Computerprogrammprodukt nach Anspruch 11 gelöst.

Das erfindungsgemäße Verfahren zum Initialisieren eines Computers beinhaltet folgende Verfahrensschritte:
a. Aufrufen eines softwarebasierten Vertrauensankers;
b. Anfragen einer Aufgabe von einem Verifizierer;
c. Bereitstellen der Aufgabe durch den Verifizierer, berechnen einer Antwort zur bereitgestellten Aufgabe durch den softwarebasierten Vertrauensanker und Übermittlung der Antwort an den Verifizierer;
d. Vergleichen der übermittelten Antwort zur bereitgestellten Aufgabe mit einer Vorhersage der Antwort durch den Verifizierer und
e. Aufrufen und Ausführen eines nachfolgenden Teilprozesses oder nachfolgender Teilprozesse des Initialisierungsprozesses unter Nutzung von durch den Verifizierer bereitgestellten Geheimnissen oder Operationen, die Geheimnisse nutzen, falls die vom softwarebasierten Vertrauensanker übermittelte Antwort mit der Vorhersage der Antwort übereinstimmt.

Vorzugsweise misst der Verifizierer die Bearbeitungszeit des Verfahrensschrittes c und vergleicht die gemessene Bearbeitungszeit des Verfahrensschrittes c mit einem Zeitschwellwert. Der Verifizierer stellt nur dann die Geheimnisse oder Operationen gemäß dem Verfahrensschritt e bereit, wenn die gemessene Bearbeitungszeit kleiner als der Zeitschwellwert ist.

Das erfindungsgemäße Computerprogrammprodukt betrifft ein Produkt mit von einem Computer ausführbaren Befehlen zur Durchführung des erfindungsgemäßen Verfahrens.

Die erfindungsgemäße Vorrichtung weist zumindest einen Computer mit einem softwarebasierten Vertrauensanker auf und einen über eine Kommunikationsschnittstelle verbundenen Verifizierer, wobei der Verifizierer ein Sicheres Element ist oder ein solches enthält und wobei das Sichere Element eingerichtet ist, eine Bearbeitungszeit des Computers zum Verfahrensschritt c zu messen und bei Unterschreiten eines Zeitschwellwertes Zugriff auf Geheimnisse zu gewähren oder Operationen unter Nutzung von Geheimnissen bereitzustellen.

Vorzugsweise beinhaltet die erfindungsgemäße Vorrichtung eine Freigabevorrichtung oder ist mit einer solchen verbunden.

Die Initialisierung eines Computers ist ein Prozess - der Initialisierungsprozess - der zumeist aus einer Reihe oder Kette von Teilprozessen besteht, die seriell aufgerufen werden, bis ein Betriebssystem geladen ist.

Unter Computer wird im Folgenden das zu initialisierende Gerät verstanden. Ein solches Gerät enthält zumindest einen Speicher und einen Prozessor, das heißt eine Einheit, die programmgesteuert arithmetische und/oder logische Operationen abarbeitet. Bei diesem Gerät kann es sich unter anderem um einen Personal-Computer, Embedded Computer, Web- und Kommunikations-Server, Videospielekonsolen, Telefon, Smartphones, Fax, Tablet-Computer, E-Reader, Bankautomaten, Verkaufsautomaten, Kassensysteme, Board-Computer/ Navigations-Computer/ Kommunikations-Computer von Fahrzeugen, Flugzeugen, Schiffen, Unterseebooten und sonstigen Verkehrsmitteln, Drohnen, Computer in Verteidigungssystemen, einschließlich von Flugkörpern handeln.

Unter Prozess wird ein durch Abarbeitung von Befehlen gesteuerter Vorgang verstanden, der seinerseits aus Teilprozessen bestehen kann, die beispielsweise einzeln aufgerufen werden können. Teilprozesse können insbesondere Funktionen oder Methoden, oder auch andere durch Sprunganweisungen erreichbare Programmteile enthalten.

Unter Programmcode wird sowohl Maschinencode, Zwischencode als auch Quellcode verstanden. Wird Programmcode im Kontext einer konkreten Adressierung von Speicher verwendet, so weiß der Fachmann, dass es sich um Maschinencode handelt. Wird Programmcode im Kontext von Funktionen, Methoden oder Prozessen verwendet, so handelt es sich zumeist um Zwischencode oder Quellcode.

Die erfindungsgemäße Idee zum sicheren Initialisieren eines Computers beinhaltet einen Teilprozess, den softwarebasierten Vertrauensanker, der während der Initialisierung des Computers aufgerufen wird, mit einem Verifizierer kommuniziert und einen nachfolgenden Teilprozess nur dann ausführbar aufruft, wenn durch den Verifizierer seine eigene Integrität und vorzugsweise die Integrität des nachfolgenden Tellprozesses oder der nachfolgenden Teilprozesse nachgewiesen wurde.

Der softwarebasierte Vertrauensanker ist ein Teilprozess, der durch einen vorangegangenen Teilprozess im Rahmen des Initialisierungsprozesses aufgerufen wird. Unter Umständen kann es auch sinnvoll sein, dass der softwarebasierte Vertrauensanker als einer der ersten Teilprozesse nach einem Reset oder Neustart des Computers aufgerufen wird, beispielsweise durch einen Urlader (Bootloader) oder Betriebssystemkern (Kernel) oder durch einen Interrupt.

Der softwarebasierte Vertrauensanker ist ein Teilprozess, welcher zumindest eine Komponente, beispielsweise eine Funktion oder Methode enthält, die eine gestellte Aufgabe löst, vorzugsweise eine Prüfsumme über den eigenen Teilprozess-Programmcode berechnet. Der softwarebasierte Vertrauensanker enthält eine weitere Komponente die zur Übermittlung der Antwort auf die Aufgabe, beispielsweise die Prüfsumme, an ein an den Computer angeschlossenes oder in den Computer eingebautes vertrauenswürdiges Gerät, den Verifizierer, dient.

Der Integritätsnachweis zum softwarebasierten Vertrauensanker erfolgt durch ein Aufgabe-Antwort-Verfahren, das heißt ein Challenge-Response-Verfahren, zwischen dem softwarebasierten Vertrauensankers und dem Verifizierer. Dazu wird dem softwarebasierten Vertrauensanker vom Verifizierer eine Aufgabe gestellt. Die Quelle der Aufgabe kann der Verifizierer selbst sein. Der softwarebasierte Vertrauensanker berechnet eine Antwort und übermittelt diese an den Verifizierer, der die Antwort mit einer Vorhersage der Antwort vergleicht. Stimmen die Antwort und die Vorhersage der Antwort überein, so gewährt der Verifizierer Zugriff auf Geheimnisse, die zur erfolgreichen Fortführung des Initialisierungsprozesses erforderlich sind und im Verifizierer selbst gespeichert sind.

Auch wenn im Folgenden von Geheimissen oder einem Geheimnis die Rede ist, kann es sich um ein Geheimnis oder mehrere Geheimnisse handeln.

Unter Geheimnissen werden Daten mit Zugriffsbeschränkung verstanden, dies können insbesondere Passwörter und Schlüssel sein, gegebenenfalls auch andere oder weitere Daten.

Der Verifizierer wird als vertrauenswürdiges Gerät einer vertrauenswürdigen Instanz angesehen, dessen Integrität nicht angezweifelt wird. Durch den Verifizierer, in Verbindung mit dem softwarebasierten Vertrauensanker, wird der Ausgangspunkt für den vor Angriffen geschützten Initialisierungsprozess gebildet. Dem Computer wird erst dann vertraut, wenn dessen Integrität und insbesondere die Integrität des softwarebasierten Vertrauensankers gegenüber dem Verifizierer nachgewiesen wurden.

Der Verifizierer ist ein Sicheres Element/Secure Element oder enthält ein solches. Dabei handelt es sich um eine Vorrichtung, die sicherheitskritische Daten speichert und/oder Operationen sicher ausführt wobei die Daten und/oder Operationen vor unberechtigtem Zugriff und/oder Manipulation geschützt sind. Als zusätzliche Absicherung kann das Sichere Element eine Freigabevorrichtung aufweisen, die das Sichere Element nur dann freigibt, wenn der Benutzter seine Identität und damit seine Berechtigung gegenüber dem Sicheren Element nachgewiesen hat. Dies kann beispielsweise durch ein Passwort, eine Persönliche Identifikationsnummer, ein biometrisches Merkmal wie einen Fingerabdruck, ein Netzhaut- oder Irisabbild geschehen.

Die erfindungsgemäße Vorrichtung beinhaltet einen mit einem Computer verbundenen Verifizierer, der zumindest bei Abarbeitung des Teilprozesses zum softwarebasierten Vertrauensanker mit dem Computer kommuniziert und eingerichtet ist, die Integrität des softwarebasierten Vertrauensankers durch ein aktives Authentifikationsverfahren, ein Aufgabe-Antwort-Verfahren/Challenge-Response-Verfahren nachzuweisen, und bei Nachweis der Integrität dem Computer Zugriff auf Geheimnisse zu gewähren oder Zugriff auf Operationen zu gewähren, die Geheimnisse nutzen. Die Geheimnisse können im Verifizierer gespeichert sein. Zugriff auf Geheimnisse gewähren kann in diesem Zusammenhang bedeuten, dass der Verifizierer Schlüssel oder entschlüsselte Daten aus ihm verschlüsselt übermittelten Daten oder Operationen bereitstellt, die im Verifizierer gespeicherte Geheimnisse nutzen. Der Verifizierer weist zumindest eine Kommunikationsschnittstelle und Speicher auf. Im Speicher abgelegt sind zumindest der Programmcode zum Berechnen der Vorhersage der Antwort oder eine gespeicherte vorberechnete Vorhersage der Antwort zum Challenge-Response-Verfahren und die zum Initialisieren des Computers erforderlichen Geheimnisse oder Operationen, die Geheimnisse nutzen.

Operationen, die Geheimnisse nutzen, sind beispielsweise Operationen zur Verschlüsselung, Entschlüsselung oder Signierung von Daten bei denen der verwendete Schlüssel geheim ist. Dem Fachmann bekannte, den Operationen zugrundeliegende Algorithmen sind zum Beispiel AES oder RSA. Der Fachmann wird vorzugsweise den für die Anwendung geeigneten, dem aktuellen Verschlüsselungsstandard zugrundeliegenden Algorithmus einsetzen. Der Vorteil des Bereitstellens von Operationen, die im Verifizierer gespeicherte Geheimnisse nutzen, ist, dass die Geheimnisse den Verifizierer nicht verlassen müssen und somit einfacher geschützt werden können.

In einem weiteren Ausführungsbeispiel handelt es sich bei den Operationen, die Geheimnisse nutzen, um kryptografische Hashfunktionen, in die Geheimnisse zusammen mit anderen Daten als Eingabedaten einfließen. Ein typischer Algorithmus ist beispielsweise SHA-1. Es ist auch möglich, dass diese oder ähnliche Algorithmen im Rahmen einer komplexeren Operation als ein Verfahrensschritt angewendet werden. Vorteilhaft sind die Operationen so zu wählen, dass das Geheimnis oder zumindest ein Teil davon nicht mit vertretbarem Aufwand von einem Angreifer aus den Eingabedaten und/oder Ausgabedaten errechnet werden kann. Je nach Anwendungsscenario werden auch einfache Operationen, wie ein Vergleich mit geheimen Daten, das Kopieren von geheimen Daten und arithmetische und/oder logische Operationen auf geheimen und/oder nicht geheimen Daten angewendet.

In einer Ausführungsform misst der Verifizierer eine Zeit **t_{sbta}**, die der softwarebasierte Vertrauensanker zur Berechnung der Antwort benötigt, und vergleicht diese Zeit mit einem Zeitschwellwert **tₘₐₓ**, der dem vom Verifizierers als zulässigen Maximalwert zur Berechnung der Antwort benötigten Zeit entspricht. Im Zeitschwellwert **tₘₐₓ** ist neben der maximal zulässigen Zeit zur Berechnung der Antwort durch den softwarebasierten Vertrauensanker auch der Zeitbedarf zur Kommunikation der Aufgabe und der Antwort zwischen dem Computer mit dem softwarebasierten Vertrauensanker und dem Verifizierer berücksichtigt.

Der Verifizierer gestattet den Zugriff auf die gespeicherten Geheimnisse nur dann oder stellt Geheimnisse nur dann bereit oder führt nur dann Operationen unter Nutzung von Geheimnissen aus, wenn die zur Berechnung der Antwort durch den softwarebasierten Vertrauensanker **t_{sbta}** benötigte und gemessene Zeit, einschließlich dem Zeitbedarf für die Kommunikation, kleiner als der Zeitschwellwert **tₘₐₓ** ist.

Der softwarebasierte Vertrauensanker ist vorzugsweise auf wiederholbar konstante höchste Berechnungsgeschwindigkeit für die Berechnung der Antwort ausgelegt, sodass der Zeitschwellwert mit höchster Wahrscheinlichkeit unterschritten wird, sofern keine Manipulation des durch den softwarebasierten Vertrauensankers geschützten Teils des Bootprozesses vorliegt. Eine Manipulation verringert die Berechnungsgeschwindigkeit des softwarebasierten Vertrauensankers, wodurch der Zeitschwellwert überschritten wird.

Der Fachmann wird die Zeitmessung durch den Verifizierer hinreichend genau implementieren und einen geeigneten Kommunikationskanal zwischen dem Computer mit dem softwarebasierten Vertrauensanker und dem Verifizierer vorsehen, sodass eine durch Manipulation des softwarebasierten Vertrauensankers erhöhte Berechnungszeit messbar ist, das heißt der Zeitschwellwert überschritten wird.

Vorzugsweise ist der Zeitbedarf zur Berechnung der Antwort durch den softwarebasierten Vertrauensanker wesentlich größer als der Zeitbedarf für die Kommunikation der Aufgabe und der Antwort. In einer Ausführungsform ist das Kommunikationsmedium/der Kommunikationskanal so gewählt, dass der Zeitbedarf zur Kommunikation im Rahmen des Aufgabe-Antwort-Verfahrens kleiner ist oder viel kleiner ist, als die Zeitauflösung der Zeitmessung.

Das zeitmessende Gerät, der Verifizierer, ist vorzugsweise so ausgelegt, dass die Zeitauflösung/Quantisierung der Zeitmessung, beispielsweise aufgrund der Taktfrequenz des zeitmessenden Gerätes kleiner oder gleich dem Zeitschwellwert ist und vorzugsweise viel kleiner als der Zeitschwellwert ist.

Ein geeigneter Zeitschwellwert **tₘₐₓ** kann durch Simulation von Angriffsszenarien auf dem Zielsystem ermittelt werden. Vorteilhaft ist es, eine Stichprobe zur Berechnungszeit **t_{sbta}** für Bootprozesse ohne Angriffe unter verschiedensten Randbedingungen zu erheben und unter Berücksichtigung der ermittelten Statistik und des Zeitbedarfs für die Kommunikation von Aufgabe und Antwort ein Wert für **tₘₐₓ** so festzulegen oder zu berechnen, dass bei einem Initialisierungsprozess ohne Angriff der Zugriff auf die gespeicherten Geheimnisse oder die Bereitstellung von Geheimnissen oder von Operationen unter Nutzung von Geheimnissen mit einer gegebenen/gewünschten hohen Wahrscheinlichkeit gestattet wird.

In einer Ausführungsform wird die Berechnung der Antwort derart implementiert und/oder eine entsprechend komplexe Aufgabe gestellt, dass jeder durch einen Angriff verursachte zusätzliche oder abweichende Ressourcenbedarf zu einer messbaren Erhöhung der durch den softwarebasierten Vertrauensanker zur Berechnung benötigten Zeit führt.

In einer Ausführungsform besteht die Aufgabe im Rahmen des Challenge-Response-Verfahrens in der Berechnung einer Prüfsumme über zumindest einen Datensatz der aus dem Programmcode des softwarebasierten Vertrauensankers und vorzugsweise zumindest aus Teilen oder dem gesamten Programmcodes nachfolgender Teilprozesse gebildet wird. Die Prüfsumme selbst ist dann die Antwort auf die im Rahmen des Challenge-Response-Verfahrens gestellte Aufgabe.

Eine Prüfsumme ist ein zumeist kurzer Datensatz, der annähernd eindeutig einen größeren Datensatz repräsentiert, aus dem sie berechnet wird. Im einfachsten Fall ist die Prüfsumme eine Quersumme der zugrundeliegenden Daten. Um die im Rahmen der Erfindung geforderte Integrität eines Datensatzes nachzuweisen, das heißt einen Manipulationsschutz bereitzustellen, wird vorzugsweise ein kryptografisch starker Prüfsummen-Algorithmus eingesetzt, vorzugsweise eine oder eine verkettete Einweg-Hash-Funktionen, insbesondere können MD4, MD5, SHA, SHA-3 (Keccak), RIPEMD, HAVAL, TIGER, PANAMA, Whirlpool, SMASH, FORK-256, BLAKE Anwendung finden. Dem Fachmann ist bekannt, dass im Rahmen des technischen Fortschritts neue Prüfsummen-Algorithmen entwickelt werden, die neuen Angriffsszenarien widerstehen können. Der Fachmann wird bevorzugt zur Berechnung der Prüfsumme im Rahmen des Challenge-Response-Verfahrens und/oder für die Berechnung der Prüfsumme über Programmcode einen aktuellen, zeitgemäßen für den Anwendungsfall geeigneten Prüfsummen-Algorithmus implementieren.

Für die Berechnung der Prüfsumme über den Programmcode im Rahmen des Aufgabe-Antwort-Verfahrens wird vorzugsweise ein an die Computer-Hardware angepasster Algorithmus verwendet, der eine zeitoptimale Prüfsummenberechnung ermöglicht. Jede Manipulation des Algorithmus führt dann zum Überschreiten des Zeitschwellwertes.

Bei dem der Prüfsummenberechnung zugrundeliegenden Datensatz handelt es sich zumindest um den Programmcode des softwarebasierten Vertrauensankers und gegebenenfalls um Programmcode nachfolgender Teilprozesse, wobei der Programmcode entweder im Klartext, in komprimierter Form oder in kryptografisch gesicherter Form im Speicher des Computers abgelegt ist. Der Datensatz kann um weitere Daten ergänzt sein, die die Hardware des Computers repräsentieren. Bei solchen Daten kann es sich um die MAC-Adresse des Netzwerkadapters des Computers, in Nur-Lesespeichern abgelegte Seriennummern, Datenträger-IDs oder Daten zu Computerressourcen wie verbautem Speicher oder Prozessor handeln. Durch das Hinzufügen Computer-spezifischer Daten wird der Integritätsschutz auf die Computer-Hardware ausgedehnt. Auch können Statusinformationen des Prozessors des Computers in den Datensatz aufgenommen werden, beispielsweise Registerinhalte diverser Statusregister oder Datenregister, aber auch Messwerte wie Prozessor-Kern-Spannung oder Temperatur. Der Integritätsschutz wird dadurch auf den Status/Zustand des Computers zum Zeitpunkt/Zeitraum der Prüfsummenberechnung ausgedehnt.

In einer weiteren Ausführungsform wird der Berechnungsalgorithmus zur Prüfsummenberechnung derart implementiert und/oder ein geeigneter Algorithmus ausgewählt, sodass der Hauptspeicher des Computers so ausgelastet wird, dass ein zusätzlicher Programmcode eines Angreifers die Zeit zur Berechnung der Prüfsumme messbar erhöht und so im Rahmen des Challenge-Response-Verfahrens der Angriff erkannt wird. Der Zugriff auf die im Verifizierer gespeicherten Geheimnisse, das Bereitstellen von Geheimnissen oder Operationen, die Geheimnisse nutzen wird dann verweigert.

Die Verweigerung des Zugriffs auf die im Verifizierer gespeicherten Geheimnisse kann dadurch gewährleistet sein, dass an Stelle des Zugriffs auf die Geheimnisse ein Zugriff auf falsche oder alternative Daten bereitgestellt wird, beispielsweise zum Ausführen alternativer Teilprozesse. Auf diese Weise können verschiedene Szenarien für den Fall eines Angriffs auf das System implementiert werden, Wiederherstellungsroutinen oder Zerstörungsroutinen für sensible Daten.

Die Berechnungsvorschrift für die Prüfsumme aus der sich selbstüberprüfenden Funktion des softwarebasierten Vertrauensankers ist vorzugsweise so gewählt, dass die zugrundeliegenden Speicheradressen in zufälliger Reihenfolge ausgelesen werden und dass der Prozessorstatus in die Berechnung einfließt, beispielsweise der Programmzählerwert oder Statusregisterwert. Vorteilhaft lässt sich die Berechnungsvorschrift nicht parallelisieren und muss in einer gegebenen Reihenfolge abgearbeitet werden, um zum gleichen Resultat zu führen. Iterativ abzuarbeitende Teile der Berechnungsvorschrift sollten so kurz wie möglich sein und die Implementierung der Berechnungsvorschrift sollte zeitoptimal sein. Gewöhnlich ist für unterschiedliche Prozessoren eine jeweils geeignete Berechnungsvorschrift zu wählen oder zu finden.

Im einfachsten Fall kann im Verifizierer als Vorhersage der Antwort eine Vielzahl von vorberechneten Wertepaaren {Aufgabe₁; Antwort₁},...,{Aufgabeₘ; Antwortₘ} gespeichert sein. Ein Wertepaar wird dann für das Challenge-Response-Verfahren zufällig ausgewählt. Auch kann die Vorhersage der zur Berechnung der Antwort benötigten Zeit im Verifizierer vorab gespeichert sein bzw. es können mehrere Vorhersagen der zur Berechnung der Antwort benötigten Zeit für unterschiedliche Randbedingungen gespeichert sein und geeignet für eine gegebene Randbedingung ausgewählt werden. Randbedingungen können sein: Das gewählte Wertepaar {Aufgabe; Antwort} der Vorhersage der Antwort, die Taktfrequenz des Computers, die Art des Computers, der Status des Computers. Die genannten Vorhersagewerte können insbesondere von der Partei ermittelt worden sein, die die Kontrolle über den Verifizierer besitzt, diesen herstellt und/oder programmiert. Diese Partei kann die Vorhersagewerte beispielsweise experimentell oder auf Basis von Modellen ermitteln.

Der Verifizierer kann auf Basis eines Zufallsgenerators die dem Challenge-Response-Verfahren zugrundeliegende Aufgabe erstellen. In einer bevorzugten Ausführungsform werden ausgehend von der Aufgabe die Vorhersage der Antwort und die Vorhersage der zur Berechnung der Antwort benötigten Zeit vom Verifizierer mit einem im Verifizierer gespeicherten Modell des softwarebasierten Vertrauensankers berechnet.

Anstelle von Sekunden kann die Zeitmessung oder -berechnung als Einheit die Zyklenzahl des Computers nutzen. Dies ist beispielsweise bei Computern mit variabler Taktfrequenz sinnvoll. Dazu sollte ein vertrauenswürdiger Kanal zur Übermittlung des Computersystemtaktes zum Verifizierer eingerichtet sein. Ein solcher vertrauenswürdiger Kanal kann in Hardware als elektrische Verbindung realisiert sein.

In einer Ausführungsform verwendet der Verifizierer die gleiche Prozessorarchitektur und den gleichen Befehlssatz, den der Computer verwendet. In diesem Fall kann es sich bei dem im Verifizierer gespeicherten Modell einfach um ein Speicherabbild des softwarebasierten Vertrauensankers handeln, ggf. mit weiteren Programmteilen, das genauso wie beim Initialisierungsprozess des Computers mit der gegebenen Aufgabe abgearbeitet wird.

Sofern eine zum Prozessor des Computers abweichende Prozessorart im Verifizierer Verwendung findet, kann ein Modell des Computers und insbesondere des dort verwendeten Prozessors im Verifizierer abgelegt sein und auf Basis des Speicherabbildes des softwarebasierten Vertrauensankers, ggf. mit weiteren Programmteilen, mit der gegebenen Aufgabe abgearbeitet werden. Die Vorhersage der Berechnungszeit kann in diesem Fall auf Basis von Zyklenzahlen des modellierten Computers berechnet werden.

Der Verifizierer ermittelt die Vorhersagewerte für die Berechnung der Antwort und/oder die Berechnungszeit bevorzugt vor dem Beginn des Challenge-Response-Verfahrens. Bevorzugt ermittelt der Verifizierer diese Vorhersagewerte während seines eigenen Initialisierungsprozesses, beispielsweise mit dem Einschalten der Stromversorgung oder dem Starten des Computers. Bevorzugt übermittelt der Verifizierer die Aufgabe erst dann an den Computer und dort den softwarebasierten Vertrauensanker, wenn die benötigten Vorhersagewerte ermittelt sind.

Sofern der Verifizierer auf Basis des Aufgabe-Antwort-Verfahrens die Integrität des softwarebasierten Vertrauensankers und gegebenenfalls weiterer Programmteile nachgewiesen hat, gibt der Verifizierer den Zugriff auf in ihm gespeicherte Geheimnisse frei und/oder stellt Geheimnisse oder Operationen unter Nutzung von Geheimnissen bereit. Dem Fachmann ist bekannt, dass gespeichert insbesondere permanent gespeichert oder temporär gespeichert bedeuten kann. So werden Konstanten oft permanent und Variablen temporär gespeichert. Gespeicherte Geheimnisse können daher auch temporär zwischengespeicherte Berechnungsergebnisse umfassen.

Bei den im Verifizierer gespeicherten Geheimnissen kann es sich um Schlüssel für ein verschlüsseltes Dateisystem oder Teile eines verschlüsselten Dateisystems auf dem Computer handeln oder andere Daten, die der Computer zwingend für den Bootprozess benötigt. Es kann sich auch um private Schlüssel einer Public-Key-Verschlüsselung handeln oder Schlüssel für symmetrische Verschlüsselung, mit der Teilprozesse und/oder Anwendungsprogramme und/oder Dateien auf dem Computer vor Zugriff geschützt oder im Zugriff beschränkt sind. Typische Zugriffsrechte sind Leserecht, Schreibrecht und Ausführungsrecht.

Bei dem Bereitstellen von Geheimnissen kann es sich um das Bereitstellen des durch den Verifizierer entschlüsselten Dateisystems oder Teile davon handeln. Der softwarebasierte Vertrauensanker übermittelt dazu das im Computer verschlüsselte, kryptographisch gesicherte Dateisystem oder Teile davon an den Verifizierer, der Verifizierer entschlüsselt diese und übermittelt sie zurück an den Computer, sodass der softwarebasierte Vertrauensanker den nachfolgenden Teilprozess auf Grundlage des nun entschlüsselten und diesem Teilprozess zugrundeliegenden Programmcodes aufrufen und ausführen kann.

In einer Ausführungsform sind im Verifizierer öffentliche Schlüssel unveränderlich gespeichert. Vom Computer an den Verifizierer übermittelte Signaturen prüft der Verifizierer unter Nutzung der Schlüssel auf ihre Gültigkeit und erlaubt Zugriff auf Teile seiner Funktionalität nur bei Gültigkeit der Signaturen oder einer Signatur.

Bei dieser Ausführungsform handelt es sich bei den im Verifizierer gespeicherten Geheimnissen um ein signiertes, gegebenenfalls selbstsigniertes Wurzel-Zertifikat oder Stamm-Zertifikat, von dem ausgehend eine Zertifikatkette gebildet wird, wodurch nur die Abarbeitung von signierten Teilprozessen und sonstige signierten Programme erlaubt wird.

Stehen der softwarebasierte Vertrauensanker und der Verifizierer über einen Kommunikationskanal miteinander derart in Kontakt, dass der Verifizierer die Integrität der softwarebasierten Vertrauensankers nachweisen kann, so bilden beide Teile zusammen einen verifizierten softwarebasierten Vertrauensanker.

Ausgehend von dem durch den Verifizierer verifizierten softwarebasierten Vertrauensanker, der als Root-of-Trust oder Trust-Anchor dienen kann, kann eine sogenannte Chain-of-Trust gebildet werden, mit der die Integrität über mehrere Teilprozesse hinweg bis zur Anwendung sichergestellt werden kann, ggf. auch über den Bootprozess hinaus.

Der Verifizierer kann fest in einem Computer verbaut, lösbar in einem Computer verbaut oder von außen steckbar/lösbar mit dem Computer verbunden sein.

Die Verbauung im Computer ist beispielsweise dann sinnvoll, wenn eine Partei einen Computer mit Software ausstattet und an einen Dritten verkauft, vermietet usw. Der Softwareausstatter kann dann die Softwareintegrität sicherstellen, ohne dass sich der Dritte mit der Integritätssicherung auseinandersetzen muss bzw. diese von außen erkennt.

Die dritte Variante, des von außen steckbar/lösbar mit dem Computer verbundenen Verifizierers, ist insbesondere bei einer personengebundenen Integritäts- oder Zugriffssicherungen von Vorteil, zum Beispiels zum Starten eines Computers mit einem verifizierten Nutzerprofil.

Dem Fachmann ist bekannt, dass die Partei, die die Kontrolle über den verifizierten softwarebasierten Vertrauensanker haben soll, einen geeigneten Formfaktor des Verifizierers und die Art der Verbindung zwischen dem Verifizierer und dem Computer geeignet auswählen wird. Bei der Partei kann es sich insbesondere um
a.) einen Hardwarehersteller,
b.) einen Veredler - Softwareausstatter, Hardwareanpassung,
c.) einen Endkunden - Privatperson oder Organisation oder
d.) einen Computernutzer handeln.

Bei a) wird der Verifizierer bevorzugt fest verbaut, als Teil des Computers. Bei b.) ist der Verifizierer bevorzugt schwer lösbar im Gehäuse des Computers verbaut. Bei c.) ist der Verifizierer lösbar im Gehäuse verbaut oder steckbar/lösbar von außen mit dem Computer verbindbar. Im Fall d.) ist der Verifizierer bevorzug leicht lösbar mit dem Computer verbindbar, ggf. auch drahtlos mit dem Computer verbindbar, ausgestaltet.

Durch die fortschreitende Miniaturisierung sind für die genannten potentiellen Einsatzfälle a.) bis d.) verschiedene Formfaktoren des Verifizierers nützlich: Im Grunde kann der Verifizierer in allen Formfaktoren eines typischen internen oder externen Erweiterungsgerätes ausgeführt werden, beispielsweise als Einsteckkarte, SD Memory Card, SmardCard, USIM oder USB-Stick. Im Fall einer personengebundenen Nutzung wird der Verifizierer bevorzugt als USB-Stick, SmardCard, Mobiltelefon oder als durch Elektronik aufgewerteter Schlüsselanhänger, Armbanduhr, Armband, Personalausweis, Reisepass ausgeführt.

Der Kommunikationskanal zwischen dem Computer und dem Verifizierer kann drahtlos oder drahtgebunden bereitgestellt werden. Drahtlose Kommunikation kann auf Basis von Nahfeldkommunikation elektromagnetisch, kapazitiv, magnetisch oder optisch ausgeführt sein oder auf Basis von Fernfeldkommunikation elektromagnetisch. Bevorzugt kommen zeitgemäße Übertragungsarten und -protokolle mobiler Geräte zu Anwendung, zurzeit beispielsweise Bluetooth, WiFi oder NFC. Bevorzugt kommuniziert der Verifizierer mit dem Computer über einen kryptographisch geschützten Kommunikationskanal, insbesondere bei drahtloser Kommunikation. Bei der Auswahl des Kommunikationsmediums und/oder Kommunikationstyps wird der Fachmann Auswirkung auf die Zeitmessung im Aufgabe-Antwort-Verfahren berücksichtigen.

Ausführungsbeispiele der vorliegenden Erfindung werden bezugnehmend auf die Figuren näher erläutert. Es zeigen:
- Fig. 1:: den Datenfluss für einen Bootprozess gemäß dem Stand der Technik;
- Fig. 2:: den Datenfluss und die Interaktion des softwarebasierten Vertrauensankers mit dem Verifizierer und Teilprozessen gemäß einem Ausführungsbeispiel der vorliegenden Erfindung;
- Fig. 3:: den Datenfluss und die Interaktion zwischen dem softwarebasierten Vertrauensanker und dem Verifizierer gemäß einem Ausführungsbeispiel der vorliegenden Erfindung;
- Fig. 4:: die Komponenten des softwarebasierten Vertrauensankers gemäß einem Ausführungsbeispiel der vorliegenden Erfindung;
- Fig. 5:: den Datenfluss und die Interaktion zwischen dem softwarebasierten Vertrauensanker und dem Verifizierer sowie ausgewählten Komponenten und einem nachfolgenden Teilprozess gemäß einem Ausführungsbeispiel der vorliegenden Erfindung;
- Fig. 6:: einen Computer mit einer Freigabevorrichtung und einem Verifizierer.

In den Figuren sind gleiche oder gleichwirkende Elemente mit gleichen Bezugszeichen versehen, sodass deren Beschreibung in den unterschiedlichen Ausführungsbeispielen untereinander austauschbar ist.

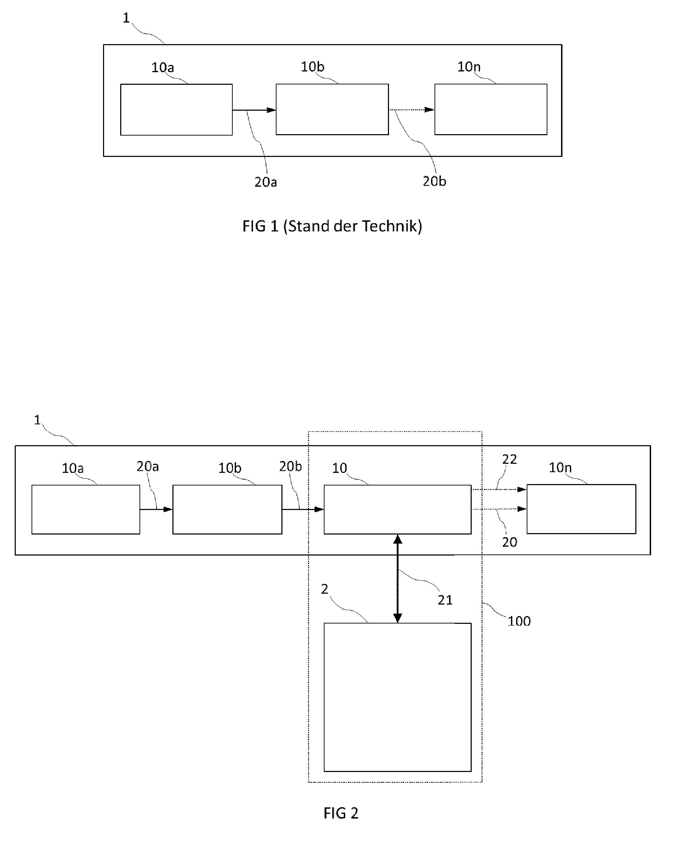

Figur 1 zeigt ein Flussdiagramm zum Bootprozess (1) gemäß dem Stand der Technik mit den Teilprozessen (10a, b,..., n). Der erste Teilprozess (10a) ruft nach Abarbeitung des eigenen Programmcodes den nächsten Teilprozess (10b) auf (20a), der seinerseits nach Abarbeitung seines Programmcodes den nachfolgenden Teilprozess aufruft (20b). Der Programmcode zum Teilprozess (10a) ist gewöhnlich in einem Nur-Lesespeicher abgelegt, der unter Kontrolle des Herstellers liegt. Der Teilprozesses (10a) ist in einem Speicherbereich abgelegt, dessen Anfangsadresse beim Start des Prozessors durch den Prozessor aufgerufen wird oder es wird von einem BIOS aufgerufen. Beim Teilprozess (10a) handelt es sich beispielsweise um eine Firmware des Herstellers des Computers oder um einen Urlader. Im ersten Fall kann es sich beim Teilprozess (10b) ebenfalls um einen Urlader handeln. Der Bootprozess (1) ist mit Abarbeitung des Teilprozesses (10n) abgeschlossen.

Beim Bootprozess (1) nach dem Stand der Technik ist ggf. der Programmcode zum Teilprozess (10a) vor Manipulation geschützt, wenn er in einem Nur-Lesespeicher abgelegt ist. Da dieser im Verantwortungsbereich des Herstellers liegt, muss sich der Nutzer mit dem von Hersteller gesetzten Sicherheitsstandard zufrieden geben. So kann es sein, dass der Hersteller keine oder unzureichende Schutzmaßnahmen zur Sicherung der Teilprozesse (10b,..., n) vorgesehen hat.

Figur 2 zeigt ein Interaktionsschaubild zum Verfahren und zur Vorrichtung gemäß einem Ausführungsbeispiel der vorliegenden Erfindung. Der Bootprozess (1) weist den Teilprozess (10) auf, bei dem es sich um den softwarebasierten Vertrauensanker handelt. Der softwarebasierte Vertrauensanker (10) wird vom vorangegangenen Teilprozess (10b) aufgerufen (20b). Der softwarebasierte Vertrauensanker (10) kommuniziert mit dem Verifizierer (2) über einen Kommunikationskanal (21). Der Verifizierer (2) und der softwarebasierte Vertrauensanker (10) bilden zusammen den verifizierten softwarebasierten Vertrauensanker (100), der als Ausgangspunkt einer verifizierten vertrauenswürdigen Kette von nachfolgenden Teilprozessen (10c,...,n) dient. Mit den Teilprozessaufrufen (20,...,20m) werden die Teilprozesse (10c,..., n) in Bezug auf ihre Integrität verifiziert (22,...,22n). Dadurch wird eine Vertrauenskette, das heißt eine Chain of Trust gebildet.

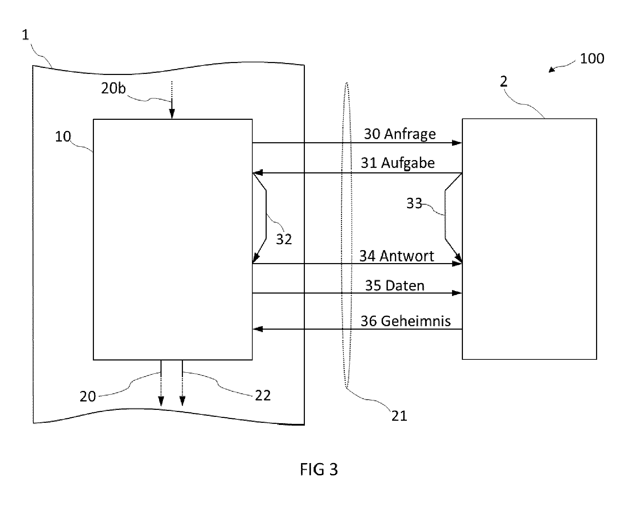

Figur 3 zeigt Interaktionen zwischen dem softwarebasierten Vertrauensanker (10) und dem Verifizierer gemäß einem Ausführungsbeispiel der vorliegenden Erfindung. Im ersten Schritt nach seinem Aufruf (20b) übermittelt der softwarebasierte Vertrauensanker (10) eine Anfrage (30) an den Verifizierer (2), um das Aufgabe-Antwort-Verfahren auszulösen. Daraufhin übermittelt (31) der Verifizierer (2) eine Aufgabe an den softwarebasierten Vertrauensanker (10), beispielsweise den Befehl die Prüfsumme zu berechnen und zu übermitteln. Der softwarebasierte Vertrauensanker (10) berechnet (32) die Prüfsumme und übermittelt (34) die Prüfsumme, die Antwort, an den Verifizierer (2). Der Verifizierer (2) hat seinerseits die Prüfsumme ermittelt, beispielsweise auf Grundlage eines Modells oder gespeicherter Prüfsummenergebnisse. Zusätzlich misst (33) der Verifizierer (2) die Zeit, die zwischen dem Übermitteln(31) der Aufgabe und dem Empfang der Antwort vergangen ist und vergleicht die gemessene Zeit (33) mit dem Zeitschwellwert, den der Verifizierer (2) beispielsweise auf Grundlage eines Modells berechnet hat oder der als Referenzwert abgespeichert ist. Neben der Antwort werden weitere Daten, vorzugsweise die Prüfsumme, ein Hash des Programmcodes des nachfolgenden Tellprozesses, der verschlüsselte Programmcode selbst oder Teile davon an den Verifizierer (2) übermittelt (35). Sofern die Antwort (34) mit der vom Verifizierer (2) ermittelten Antwort, übereinstimmt und die gemessene Zeit (33) kleiner dem Zeitschwellwert ist, übermittelt (36) der Verifizierer (2) Geheimnisse (7) an den softwarebasierten Vertrauensanker (10), die zum erfolgreichen Aufrufen (20) und/oder zur erfolgreichen Ausführung des nachfolgenden Teilprozesses (10c) notwendig sind oder stellt Operationen, die Geheimnisse nutzen, bereit (36). Der Verifizierer (2) wird die Übermittlung/Bereitstellung (36) der Geheimnisse (7) oder Operationen unterbinden, wenn die übermittelten Daten (35) von einem erwarteten Wert abweichen. Eine solche Abweichung kommt beispielsweise dann zustande, wenn es sich bei den übermittelten (35) Daten um einen Hash des Programmcodes des nachfolgenden Teilprozesses (10c) handelt oder die Daten diesen enthalten, im Verifizierer (2) der Hash des originalen Programmcodes gespeichert ist und eine Manipulation zur Abweichung zwischen den beiden Hashes führt.

Über einen Informationsfluss (22) zwischen dem softwarebasierten Vertrauensanker (10) und den nachfolgenden Teilprozess werden die zum erfolgreichen Aufrufen (20) und/oder zur erfolgreichen Ausführung des nachfolgenden Teilprozesses notwendigen Informationen ausgetauscht. Bei diesen Informationen kann es sich um kryptografische Schüssel, Hashes, Operationen die Geheimnisse nutzen oder sonstige Daten handeln.

In einem Ausführungsbeispiel ist der Programmcode des nachfolgenden Teilprozesses verschlüsselt auf dem Computer gespeichert. Die vom Verifizierer (2) bereitgestellten Geheimnisse sind die zur Entschlüsselung erforderlichen Schlüssel. Die Entschlüsselung findet auf dem Computer im Rahmen des Bootprozesses (1) bei oder vor Ausführung des nachfolgenden Teilprozesses statt.

In einem weiteren Ausführungsbeispiel handelt es sich bei den übermittelten (35) Daten um den verschlüsselten Programmcode zumindest des nachfolgenden Teilprozesses (10c) und bei der Bereitstellung (36) des Geheimnisses um den entschlüsselten Programmcode des nachfolgenden Teilprozesses (10c). Die Entschlüsselung findet im Verifizierer (2) statt.

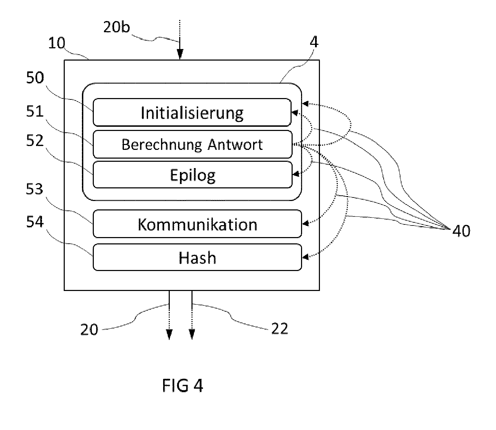

Figur 4 zeigt die Funktionen (50,...,54) des softwarebasierten Vertrauensankers (10) gemäß einem Ausführungsbeispiel der vorliegenden Erfindung, die im Wesentlichen von oben nach unten abgearbeitet/ausgeführt werden. Die Funktionen Initialisierung (50), Berechnung der Antwort (51) und Epilog (52) bilden den Kernblock (4) der Prüfsummenberechnung. Die Funktionen Kommunikation (53) und Hash (54) stellen all die Funktionalität zur Verfügung, die nicht von der Prüfsummenberechnung abgedeckt ist. Vorzugsweise fließt in die Prüfsummenberechnung selbst der Programmcode aller Funktionen (50,...,54) ein.

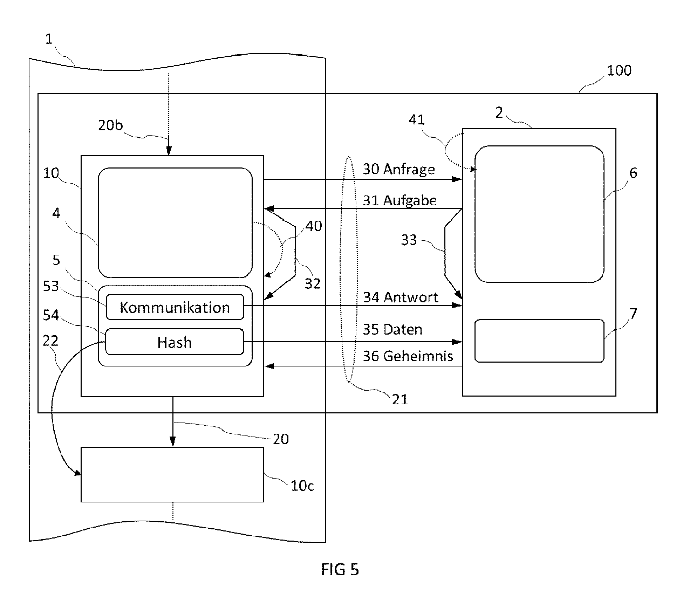

Figur 5 ist ein Interaktionsschaubild zur Darstellung der Interaktion des softwarebasierten Vertrauensankers (10) und des Verifizierers (2) gemäß einem Ausführungsbeispiel der vorliegenden Erfindung, die im Verbund den verifizierten softwarebasierten Vertrauensanker (100) bilden. Des Weiteren zeigt das Interaktionsschaubild den Aufruf (20b) des softwarebasierten Vertrauensankers (10) durch den vorangehenden Teilprozess und den Aufruf (20) des nachfolgenden Teilprozesses (10c) durch den softwarebasierten Vertrauensanker (10). Sobald der Teilprozess softwarebasierter Vertrauensanker (10) durch den Aufruf (20b) gestartet wird, sendet (30) der Teilprozess (10) als Teil eines Aufgabe-Antwort-Verfahrens eine Anfrage an den Verifizierer (2), der eine Kopie (6) des softwarebasierten Vertrauensankers (10) enthält. Der Verifizierer (2) übermittelt (31) daraufhin eine Aufgabe an den Teilprozess (10) und startet die Zeitmessung (33). Die Funktionen des Kernblocks (4) führen die Prüfsummenberechnung (32) zumindest über den Speicherbreich (40) abgelegten Programmcode des Teilprozesses (10) durch. Sobald das Ergebnis der Prüfsummenberechnung (32) vorliegt übermittelt (34) die Funktion (53) die Prüfsumme als Antwort an den Verifizierer (2), der daraufhin die Zeitmessung (33) stoppt, wodurch ein Messwert zur Bearbeitungszeit einschließlich des Zeitbedarfs für die Kommunikation, ermittelt wird. Zusätzlich berechnet (22) die Hash-Funktion (54) des softwarebasierten Vertrauensankers (10) einen Hash über den im Speicher abgelegten Programmcode des nachfolgenden Teilprozesses (10c) und übermittelt (35) diese zusätzlichen Daten an den Verifizierer (2). Im Verifizierer (2) ist ein erwarteter Hashwert (7) gespeichert, wodurch der Verifizierer (2) den von der Funktion (54) berechneten Hash mit dem gespeicherten Hash (7) vergleichen kann. Der Verifizierer (2) vergleicht das Berechnungsergebnis zur Prüfsumme, das heißt die Antwort (34), mit einer berechneten Vorhersage zur Prüfsumme und die im Rahmen der Zeitmessung (33) ermittelte Bearbeitungszeit mit einem Zeitschwellwert. Sofern die übermittelte (34) Antwort mit der Vorhersage zur Prüfsumme übereinstimmt und die im Rahmen der Zeitmessung (33) ermittelte Bearbeitungszeit kleiner dem Zeitschwellwert ist, übermittelt (36) der Verifizierer (2) in ihm gespeicherte Geheimnisse (7) an den Teilprozess (10), stellt Geheimnisse oder Operationen, die Geheimnisse nutzen bereit. Die Übereinstimmung des von der Funktion (54) berechneten Hashes mit der im Verifizierer (2) gespeicherten Kopie (7) des Hashes kann eine zusätzliche Bedingung zur Freigabe/Übermittlung oder Zurverfügungstellung (36) der Geheimnisse oder Operationen sein. Neben dem gespeicherten Hash können im Verifizierer weitere Geheimnisse gespeichert sein.

Dem Fachmann ist bekannt, dass unter gespeichert sowohl dauerhaft gespeichert, als auch temporär gespeichert verstanden werden kann. Beispielsweise kann es sich bei dem Geheimnis (7) unter anderem um die in Variablen gespeicherten Berechnungsergebnisse aus einer Entschlüsselung der übermittelten Daten (35) handeln.

Da der Verifizierer (2) die übermittelte (31) Aufgabe im Rahmen des Aufgabe-Antwort-Verfahrens stellt, kann er Wertepaare der Form {Aufgabe; Antwort} auf Basis der Kopie (6) des softwarebasierten Vertrauensankers (10) vorab berechnen (41). Dadurch kann der Verifizierer (2) während der Ausführung des Aufgabe-Antwort-Verfahrens seine Ressourcen im Wesentlichen auf die Zeitmessung verwenden, da die Vorhersagewerte für die Prüfsumme und Bearbeitungszeit und damit der Zeitschwellwert vorberechnet oder vorermittelt und gespeichert ist. Die Funktionen Kommunikation (53) und Hash (54) werden in einer gesicherten Ausführungsumgebung (5), zum Beispiel einer Ausführungsumgebung mit deaktivierten Interrupts, ausgeführt, die sicherstellt, dass ein Angreifer keine Kontrolle über den Prozessor erlangt, beispielsweise durch das Auslösen von Ausnahmebedingungen.

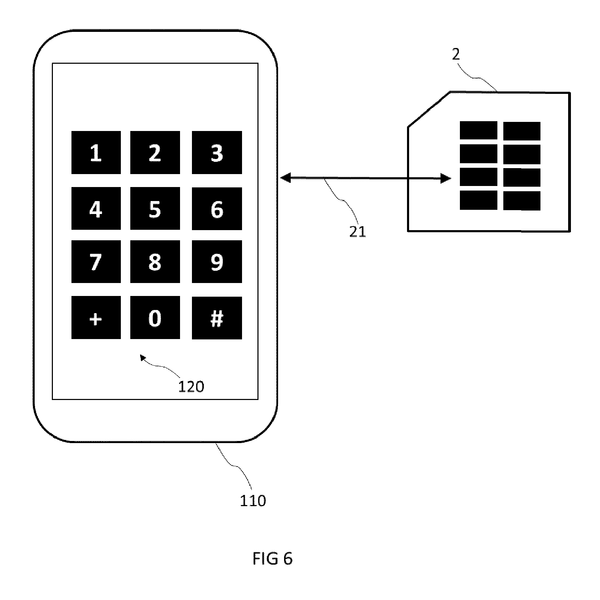

Figur 6 zeigt gemäß einem Ausführungsbeispiel der vorliegenden Erfindung einen Computer (110), der über einen Kommunikationskanal (21) mit einem Verifizierer (2) verbunden ist. Der Computer (110) weist eine Freigabevorrichtung (120) auf, beispielsweise ein Eingabefeld für eine Persönliche Identifikationsnummer, ein Passwort oder ein anderes Mittel zur Identifikation des Benutzers. Nur bei erfolgreicher Identifikation eines zugelassenen Benutzers gibt die Freigabevorrichtung (120) den Verifizierer (2) frei, das heißt, der Verifizierer (2) stellt seine vollständige Funktionalität nur dann bereit, wenn die Freigabevorrichtung (120) einen zugelassenen Benutzer identifiziert hat. Sowohl die Freigabe des Verifizierers (2), als auch das Bereitstellen der Funktionalität des Verifizierers (2) können über den Kommunikationskanal (21) erfolgen. Es ist aber auch möglich, dass die Freigabevorrichtung (120) nicht vom Computer (110), sondern vom Verifizierer (2) oder von einem weiteren Gerät bereitgestellt wird. In diesem Fall erfolgt die Freigabe nicht über den Kommunikationskanal (21). Bei der vom Verifizierer (2) bereitgestellten Freigabevorrichtung (120) kann es sich beispielsweise um einen im Verifizierer (2) integrierten Fingerabdrucksensor handeln.

Im folgenden Ausführungsbeispiel wird die Prüfsummenberechnung in einer ARMv7-A Prozessorarchitektur, insbesondere Cortex-A8 Prozessorarchitektur implementiert. Die prozessorspezifische Implementierung erlaubt es, die gewünschten Eigenschaften der Prüfsummenberechnung zu erfüllen. In einem Mehrkern-Prozessorsystem oder einem Mehrprozessorsystem kann die vorgestellte Prüfsummenberechnung mit einem generischen Ansatz kombiniert werden.

Die ARMv7-A Architektur weist einige Besonderheiten auf, die zu berücksichtigen sind. So ist dem Programmzähler (PC) ein explizites Register zugewiesen und auf das Status Register (SR) gibt es keinen, einem normalen Register vergleichbaren Zugriff. Flags müssen explizit gesetzt werden. Der Speicherzugriff ist nur über bestimmte Befehle möglich (load/store-Architektur). Viele Befehle erlauben das Rotieren/Verschieben des zweiten Operanden ohne zusätzlichen Befehl und, zumindest auf der Cortex-A8 Architektur, ohne zusätzlichen Ressourcenbedarf. Außerdem gibt es zwei verschiedene Befehlssätze: ARM und Thumb-2. Letzterer vermischt 16 Bit und 32 Bit breite Befehle, um die Befehlsdichte zu erhöhen.

Es ist wichtig, dass die Hardware (der Prozessor) so konfiguriert wird, dass die Prüfsummenberechnung mit maximaler Geschwindigkeit abgearbeitet wird. Jede ungenutzte Optimierung könnte von einem Angreifer zum Verstecken von durch Programmänderungen eingefügten Verzögerungen ausgenutzt werden. Der Prozessor sollte mit der maximalen, per Software einstellbaren Taktfrequenz laufen und Optimierungseinheiten wie Branchprediction und Caching sollten aktiviert sein. Für Letzteres muss die Memory Management Unit (MMU) eingeschaltet sein.

Neben der auf Performanz ausgerichteten Initialisierung sollten Interrupts während der Prüfsummenberechnung und kurz danach deaktiviert sein, um einem Angreifer keine Gelegenheit zu bieten, während oder kurz nach der Berechnung Kontrolle über den Prozessor zu erlangen.

Durch eine geeignete Initialisierung ist es einem Angreifer unmöglich, Einstellungen zu ändern, ohne dass es bei der Prüfsummenberechnung zum Performanceverlust kommt und die Verifikation scheitert.

Der folgende Pseudo-Code ist ein Ausführungsbeispiel einer Berechnungsvorschrift zur Prüfsummenberechnung (51). Der Pseudo-Code lässt sich in drei Teilfunktionen gliedern:
A. Berechnung einer Pseudorandom-Nummer, d.h. "pseudorandom update" Zeile 6
B. Berechnung der Speicheradresse, deren Datum in die Prüfsummenberechnung einfließen soll, d.h. "data address update" Zeile 8
C. Berechnung der Prüfsummenteile, Zeilen 10 bis 17

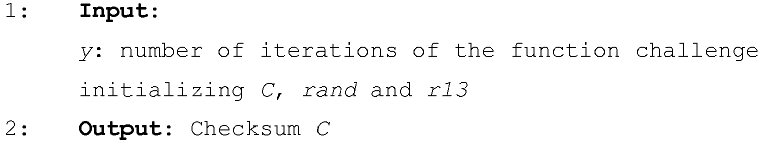

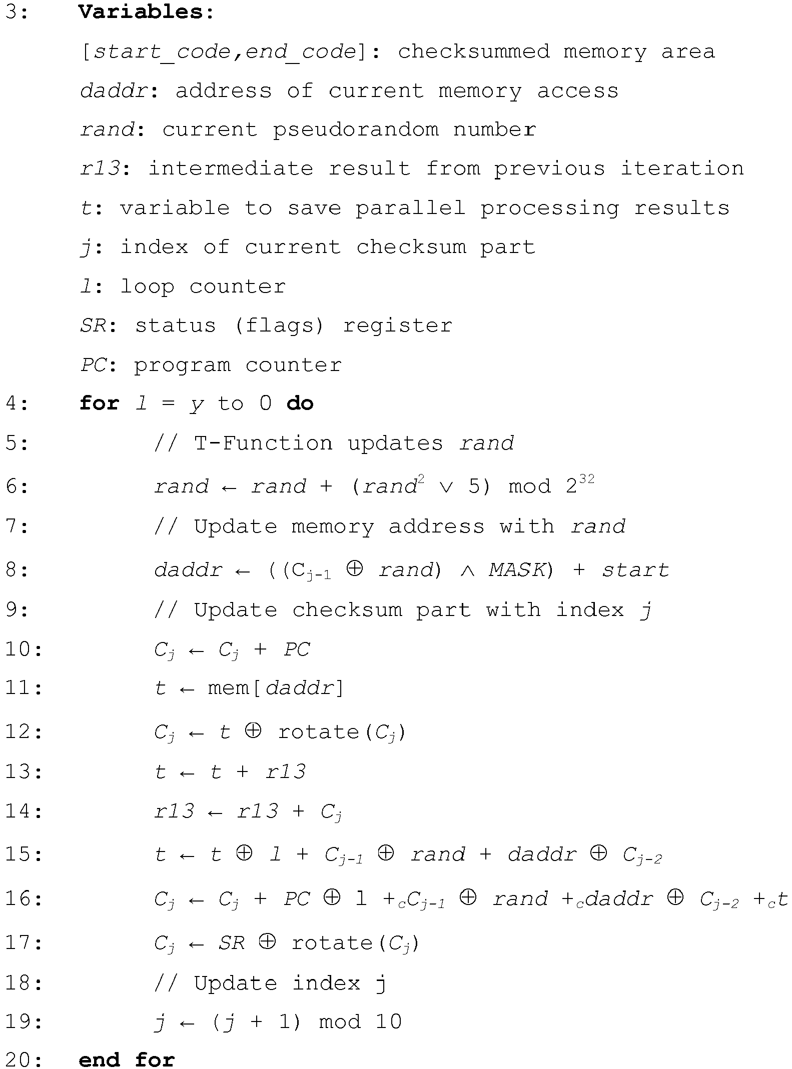

Zusammen mit dem Herunterzählen des Schleifenzählers bilden diese drei Teilfunktionen den Kern der Prüfsummenberechnung, den Kernblock (4). Die Prüfsumme ist in einzelne Teile zerlegt, die in den verfügbaren Registern gespeichert werden. Die Teilfunktionen B und C nutzen Teile der Prüfsumme als Eingabe und Teilfunktion C aktualisiert immer genau einen Teil der Prüfsumme pro Iteration. Daraus folgt, dass die Schleife j-mal durchlaufen werden muss um einmal alle Teile der Prüfsumme zu aktualisieren. Wie weiter unten beschrieben, wird die gezeigte Schleife in der Implementierung entrollt so dass eine größere Schleife entsteht, die alle Prüfsummenteile genau einmal aktualisiert. Diese entrollte Schleife enthält dann *j* Kernblöcke, die jeweils einer Iteration des oben gezeigten Algorithmus entsprechen und jeweils spezifisch für einen Teil der Prüfsumme bzw. das entsprechende Register sind.

Alle drei Teilfunktionen, aber insbesondere die Teilfunktion C müssen jeweils an die Prozessor-Architektur angepasst werden.

Die Zieleigenschaften der Prüfsummenberechnung werden durch den vorgestellten Pseudo-Code erreicht: Der Speicher wird über ein Zufallsmuster durchlaufen und der Prozessorstatus ist durch den Programmzähler (PC) und das Status Register (SR) in der Prüfsumme enthalten. Die Berechnung erfolgt in einer festgelegten Abfolge von Schritten (strongly-ordered) und ist nicht parallelisierbar. Jeder Teil der Berechnung erfordert das Berechnungsergebnis des vorangegangenen Teils als Eingabe. Die Teile zur Berechnung der Prüfsumme sind durch add (+), add-with-carry (+_{c}) und XOR (⊕) Operationen voneinander abhängig.

Die in dem ARM Prozessor implementierte Prüfsummenberechnung wird im Supervisor-Mode abgearbeitet. Der Pseudo-Code wird als folgender Assembler-Code implementiert, wobei die Teilfunktionen B und C jeweils Code zeigen der spezifisch für den ersten der 10 Kernblöcke der entrollten Schleife ist, d.h. als Eingabewerte chk9 (*Cⱼ₋₁*) und chk8 (*Cⱼ₋₂*) verwenden und chk0 (*Cⱼ*) aktualisieren:
Teilfunktion A., Berechnung einer Pseudorandom-Nummer

| | | |
|---|---|---|
| 1: | mul rs, rand, rand | @ x² |
| 2: | orr rs, rs, 0x5 | @ x²v 5 |
| 3: | add rand, rs, rand | @ (x²v 5)+x |

Teilfunktion B., Berechnung der Speicheradresse (Erster Kernblock)

| | | |
|---|---|---|
| 4: | eors daddr, chk9, rand | @ Zufallszahl ableiten |
| 5: | ldr rs, =0x7ff<<2 | @ Maske ins rs-Register laden |
| 6: | and daddr, daddr, rs | @ Offset berechnen durch |
| | | maskieren der Zufallszahl |
| 7 : | adr rs, start_code | @ Start-Adresse berechnen PC-relativ |
| 8: | add daddr, daddr, rs | @ Offset zu Start-Adresse addieren |

Teilfunktion C., Berechnung der Prüfsummenteile (Erster Kernblock)

| | | |
|---|---|---|
| 9: | add chk0, chk0, pc | @ *C₀* ← *C₀* + *PC* |
| 10: | ldr rs, [daddr] | @ *t* ← mem[*daddr*] |
| | | |
| 11: | eor chk0, rs, chk0, ror 1 | @ *C₀ ←* t ⊕ rotate (*C₀*) |
| 12: | add rs, rs, r13 | @ *t* ← *t* + *r13* |
| 13: | add r13, chk0 | @ *r13 ← r13* + *C₀* |
| 14: | add chk0, chk0, pc | @ *C₀* ← *C₀* + *PC* |
| 15: | eors rs, rs, loopctr | @ *t* ← *t* ⊕ *l* |
| 16: | eors chk0, chk0, loopctr | @ *C₀* ← *C₀* ⊕ *l* |
| 17: | add rs, rs, chk9 | @ t ← t + *C₉* |
| 18: | adcs chk0, chk0, chk9 | @ *C₀* ← *Co +_{c}C₉* |
| 19: | eors rs, rs, rand | @ t ← t ⊕ *rand* |
| 20: | eors chk0, chk0, rand | @ *C₀ ← C₀* ⊕ *rand* |
| 21: | add rs, rs, daddr | @ t ← t + *daddr* |
| 22: | adcs chk0, chk0, daddr | @ *C₀ ← C₀* + *_{c}daddr* |
| 23: | eors rs, rs, chk8 | @ *t* ← t ⊕ C₈ |
| 24: | eors chk0, chk0, chk8 | @ *C₀* ← *C₀* ⊕ *C₈* |
| 25: | adcs chk0, chk0, rs | @ *C₀* ← *C₀ +_{c}t* |
| 26: | mrs rs, cpsr | @ *SR* laden |
| 27: | eor chk0, rs, chk0, ror 1 | @ *C₀ ← SR* ⊕ rotate (*C₀*) |
| 28: | sub loopctr, loopctr, 1 | @ decrement 1 |

Für den Assembler-Code wird folgende Registerzuordnung verwendet:

| **Register** | **Variable** |
|---|---|
| *r0* | *loopctr* |
| *r1* | *rand* |
| *r2* | *daddr* |
| *r3* | *rs* |
| *r4* | *chk0* |
| *r5* | *chk1* |
| *r6* | *chk2* |
| *r7* | *chk3* |
| *r8* | *chk4* |
| *r9* | *chk5* |
| *r10* | *chk6* |
| *r11* | *chk7* |
| *r12* | *chk8* |
| *r13 (SP)* | |
| *r14 (LR)* | *chk9* |
| *r15 (PC)* | |

Jede Variable ist auf ein spezifisches Register abgebildet. Das Register rs wird als Zwischenspeicher für diverse Werte verwendet, insbesondere während eines Schleifendurchlaufs für die Variable t aus dem Pseudocode. Die zehn Register chk0 bis chk9 speichern die Prüfsumme mit einer Gesamtdatenwortbreite von 320 Bit. Zur effektiven Nutzung der verfügbaren Register ist die Berechnungsschleife entrollt für die zehn Prüfsummen-spezifische Blöcke. Damit hat der Index j des Pseudo-Codes keine Repräsentation in der implementierten Prüfsummenberechnung. Die Umsetzung der Prüfsummenberechnung zum softwarebasierten Vertrauensanker nutzt den Thumb-2 Befehlssatz der ARM Architektur. Damit sind bei Berechnungen sowohl 16 Bit als auch 32 Bit Befehle nutzbar, wodurch bestimmte Formen von "memory copy attacks" verhindert werden. Bei Nutzung des Thumb-2 Befehlssatzes sind die Register r13 (Stack Pointer, SP) und r15 (Program Counter, PC) nur durch ausgewählte Befehle nutzbar. Aus diesem Grund kann r13 nicht als eines der Prüfsummen-Register verwendet werden. Um die gewünschten Eigenschaften der Prüfsummenberechnung zu erzielen, sollten alle Register verwendet werden. Daher wird r13 für die Speicherung von Zwischenergebnissen benutzt, auf die die Prüfsummenberechnung in der jeweils nachfolgenden Iteration zurückgreift. Der Registername r13 wird als solches im Pseudo-Code und im Assembler-Code verwendet. Die Implementierung des Pseudo-Codes in Assembler ist dahingehend getestet, dass die Pipeline des ARM-Prozessors optimal genutzt wird und so eine optimale Performanz erreicht wird. Jede Code-Manipulation durch einen Angreifer wird somit die Performanz messbar senken. Die Abarbeitung der implementierten Teilfunktionen A., B. und C. benötigt lediglich 31 Prozessor-Zyklen. Die bedingten Sprungfunktionen am Ende der Schleife und die im Folgenden beschriebene "self-modifying"-Sequenz benötigen weitere 0,1 bzw. 0,42 Prozessor-Zyklen pro Durchlauf der Teilfunktionen A., B. und C.

Die "self-modifying"-Technik schützt die Prüfsummenberechnung des softwarebasierten Vertrauensankers gegen sogenannte "Translation Lookaside Buffer"(TLB)-Desynchronisations Angriffe, bei denen ein Angreifer dafür sorgt, dass der Daten- und der Instruktions-TLB - DTLB und ITLB - unterschiedliche Übersetzungen für die gleichen Speicheradressen beinhalten.. Der "self-modifying" Programmcode greift auf den eigenen Programmcode über den "Data Translation Lookaside Buffer" (DTLB) zu und kann somit zu einer verändertenPrüfsumme führen, wenn die TLBs unsynchroniert sind. Die ARM-Architektur erfordert eine explizite und resourcenaufwändige Cache-Verwaltungsoperation für die Implementierung von "self-modifying" Programmcode, insbesondere um Änderungen im Daten-Cache an den Befehls-Cache weiterzuleiten. Der softvvarebasierte Vertrauensanker optimiert die "self-modifying"-Sequenz durch Konfiguration des Level 1 Cache als "vvrite-through" und des Level 2 Cache als "vvrite-back". Da die Performance-Einbuße für das Invalidieren des Befehls-Cache 60 Prozessorzyklen benötigt, im Vergleich zu 31 Zyklen für den Kern der Prüfsummenberechnung, ist es nicht sinnvoll, die "self-modifying"-Sequenz mit jeder Ausführung des Kerns der Prüfsummenberechnung zu durchlaufen. Die "self-modifying" Sequenz wir daher nur bei jeder n-ten Ausführung des Kerns der Prüfsummenberechnung durchlaufen, bespeilsweise bei jeder zehnten Ausführung der entrollten Berechnungsschleife. Auf Zufallsbasis wählt die "self-modifying"-Sequenz einen der 10 entrollten Kernblocke und ändert den letzten, eigentlich konstanten Operanden bei der Rotationsoperation in Zeile 11 des Assembler-Codes (im Code hat der Operand den Wert 1) auf einen zufälligen erlaubten Wert. Ein Angreifer, der die Funktion der "self-modifying"-Sequenz statisch simuliert, müsste die gleiche Änderung durchführen, um sein unverfälschtes Speicherabbild mit den modifizierten Befehlen zu aktualisieren, müsste aber zusätzlich die Auswirkungen (nämlich die veränderte Rotation) in jedem Block seines statischen Codes abfangen und simulieren. Der Angreifer spart 60 Prozessorzyklen (60=n pro Kernblock), da er für seinen statischen Code nicht den Cache leeren muss, aber er benötigt zusätzliche Befehle (zum Beispiel Laden der Anzahl der Rotationen und Register-Rotation) in jedem seiner Kernblöcke für die Simulation. Die Simulation benötigt mindestens einen zusätzlichen Prozessorzyklus bei der Ausführung eines jeden Kernblocks, da es kein freies Register gibt und zusätzliche Befehle einen geänderten Programmzähler und damit eine geänderte Prüfsumme zur Folge haben.Dies ist inbesondere im Inneren des Kernblocks der Fall, wo die Simulation durchgeführt werden muss.

Die Prüfsummenberechnung wird mit einer 320 Bit breiten Aufgabe (Challenge) initialisiert, so dass alle Prüfsummenregister mit einem Anfangswert initialisiert sind. Der Startwert (Seed) für die Pseudorandom-Berechnung wird aus der Aufgabe durch XOR-ing der Prüfsummeninitialisierung berechnet. Zusätzlich wird Register r13 mit einem von diesem abgeleiteten Wert initialisiert. Die Pseudorandom-Berechnung nutzt eine T-Funktion die durch die Zeilen 1 bis 3 des Assembler-Codes implementiert ist. Die Berechnung nutzt lediglich den vorangegangenen Wert von rand und speichert Zwischenergebnisse im Register rs.

Der Fachmann versteht unter einer T-Funktion eine Abbildung, die einen Zustand in einen Folgezustand überführt indem jedes Bit des Zustands durch eine Linearkombination mit dem Bit selbst und einer Funktion auf den relativ zum Bit gesehen niederwertigeren Bits (oder einer Untermenge dieser) aktualisiert wird.

Die Speicheradressenberechnung des softwarebasierten Vertrauensankers ist durch die Zeilen 4 bis 8 des Assembler-Codes implementiert. Um eine optimale Performanz zu erreichen, werden nur auf die Datenwortbreite ausgerichtete Adressen erzeugt. Die Prüfsumme wird über acht KiB beginnend bei der Adresse start_code berechnet. Dieser Bereich ist groß genug um alle Teile des softwarebasierten Vertrauensankers einzuschließen. Die start_code Adresse wird relativ zum Programmzähler (PC) mit dem adr-Befehl erzeugt. In den Zeilen 9 bis 28 des Assembler-Codes ist die Prüfsummenberechnung implementiert. Der Assembler-Code berechnet den ersten Teil der Prüfsumme und ist somit spezifisch für den ersten Kernblock der entrollten Berechnungs-Schleife. Um das Register rs durchgängig zu benutzen und somit eine mögliche Nutzung durch einen Angreifer zu unterbinden, nutzt der softwarebasierte Vertrauensanker dieses Register für Speicherwerte parallel zur Prüfsummenberechnung und arbeitet den Speicherwert in die Prüfsumme ein, kurz bevor es zum Laden des Current Program Status Register (CPSR, ARM Status Register) genutzt wird. Diese Operationen füllen die Cortex-A8 Dual-Issue Pipeline optimal und verursachen nahezu keinen zusätzlichen Aufwand. Einige Befehle werden in ihren "flag"-setzenden Variante (im Assembler-Code mit dem Suffix ,s') benutzt, um das Fälschen des CPSR zu erschweren. Dies ist insbesondere für den Additions-Befehl vor dem mrs-Befehl, der das CPSR liest, wichtig, da hierdurch das Verschieben des mrs-Befehls an eine obere Position verhindert wird. Die Ausführung des mrs-Befehls dauert mit circa 8 Prozessorzyklen auf einem Cortex-A8 vergleichsweise lange. Trotzdem sollte es unmöglich sein das CPSR zu manipulieren, da ein Angreifer in der gleichen oder in weniger Zeit die "Flags" in seinem Sinne dynamisch setzen müsste. Der softwarebasierte Vertrauensanker verwendet in den Zeilen 12 und 13 des Assembler-Codes zwei Operationen, um das Register r13 für einen Angreifer nicht verfügbar zu machen. Mit diesen zwei Operationen wird das Zwischenergebnis der Berechnung aus dem vorangegangenen Kernblock in die Prüfsumme eingearbeitet. Um den Overhead zu reduzieren, die Reihenfolge der add/eor-Sequenz sicherzustellen und gegen bestimmte "memory copy attacks" zu schützen, wird die Berechnung über den Umweg des Registers rs, d.h. Variable t, die nahe dem Ende der Sequenz in die Prüfsumme eingearbeitet wird, durchgeführt (Zeile 25 des Assembler-Codes).

Da die Ausführung des Kernblocks 31,52 Prozessorzyklen erfordert, würde ein zusätzlicher Prozessorzyklus pro Kernblock die Abarbeitungszeit um 3,17% erhöhen (32,51/31,52=103,17%). Ein solcher Mehraufwand sollte, abhängig vom verwendeten Kommunikationsmechanismus und dessen Latenz leicht messbar sein. Demnach ist es ausreichend zu zeigen, dass ein Angriff mindestens einen zusätzlichen Prozessorzyklus zur Folge hat, denn dies ist messbar und der softwarebasierte Vertrauensanker kann dem Angriff entgegenwirken, die Geheimnisse schützen.

Typische Angriffstypen sind:
Substitutions-Anariff ("substitution attack"), der Angreifer ersetzt Teile des Vertrauensanker Programmcodes, um den Programm-Fluss auf eigenen Programmcode umzulenken. Dazu muss er es schaffen, die Prüfsummenberechnung für den von ihm manipulierten Teil des Vertrauensankers zu umgehen.
Speicher-Kopier-Angriff ("memory copy attack"), der Angreifer modifiziert den Programmcode, behält aber eine unmanipulierte Kopie des Programmcodes an einer anderen Stelle im Speicher. Der modifizierte Programmcode berechnet die Prüfsumme, indem alle Speicherlese-Befehle, die im Kontext der Prüfsummenfunktion ausgeführt werden, auf das Speicherabbild des korrekten Programmcodes umgeleitet werden.
Übersetzungspuffer-Angriffe (Translation Lookaside Buffer (TLB)-Desynchronisierungs-Angriffe , "TLB attacks"), der Angreifer manipuliert den Inhalt des TLB (Übersetzungspuffers), der der Memory Management Unit (MMU) als Zwischenspeicher für virtuelle Adressen dient, so dass der Instruction TLB (ITLB) und Data TLB (DTLB) für virtuelle Adressen im Bereich des softwarebasierten Vertrauensankers auf unterschiedliche physische Adressen übersetzen. Damit kann ein Angreifer erreichen, dass Instruktionen von seiner manipulierten Version des Programmcodes geladen werden, explizite Datenzugriffsoperationen allerdings auf die unmanipulierte Version des Programmcodes an einer anderen Stelle im Speicher umgeleitet werden, obwohl beide die gleichen virtuellen Adressen zugreifen.

Für einen erfolgreichen Substitutions-Angriff ersetzt der Angreifer Teile des Prüfsummen-Speicherbereiches ohne das Prüfsummenergebnis zu beeinflussen oder die Ausführungszeit zu ändern. Einfache Substitutions-Angriffe werden durch den zufälligen Speicherdurchlauf der Prüfsummenberechnungsvorschrift verhindert, da der Angreifer eine bedingte Anweisung in die Prüfsummenberechnungs-Schleife einarbeiten muss, um zu prüfen, ob die von ihm modifizierte Speicheradresse gelesen wurde und diese Modifikation zu verstecken ist. Der Performanz-Verlust ist einfach zu messen, der softwarebasierte Vertrauensanker wird diesem Angriff standhalten.

Ein Additions-Befehl und ein bitweises XOR verarbeitet das höchstwertige Bit exakt identisch. Aus diesem Grund wird eine Sequenz von alternierenden einfachen Additionen und bitweisen-XORs, wie es bei einer Prüfsummenberechnung der Fall ist, zum gleichen Ergebnis führen, sofern das höchstwertige Bit bei einer geraden Anzahl von Operanden invertiert wird. Der softwarebasierte Vertrauensanker beugt einem Angiffsszenario auf Basis dieser Erkenntnis durch Nutzung der "Flags" und Additionen mit Übertrag vor.

Leider erlaubt der Thumb-2 Befehlssatz den Programm-Zähler (PC) nicht als Operand von Addition mit Übertrags-Befehlen. Das ermöglicht einen Angriff bei dem die höchstwertigen Bits des Programm-Zählers in den beiden Programm-Zähler Operationen, Zeilen 9 und 14 des Assembler-Codes, sich gegeneinander aufheben. D.h., die Ausführung von Programmcode von einer Adresse mit invertierten höchstwertigen Bits würde zur gleichen Prüfsumme führen. Der softwarebasierte Vertrauensanker beugt diesem Angriff durch Rotation der Prüfsumme zwischen den beiden Programm-Zähler Operationen vor (Zeile 11 des Assembler-Codes). Da die Rotation gleichzeitig mit der eor-Operation ausgeführt wird, benötigt sie, zumindest auf Cortex-A8 Prozessoren, keinen zusätzlichen Prozessorzyklus.

Der softwarebasierte Vertrauensanker beugt Manipulationen der höchstwertigen Bits vor, die sich über mehrere Schleifendurchläufe der entrollten Prüfsummenberechnung erstrecken, indem am Ende eines jeden Kernblocks, Zeile 27 des Assembler-Codes, eine Rotation des aktuellen Prüfsummenteils durchgeführt wird wobei auch diese Rotation keine zusätzlichen Zyklen braucht, da sie zusammen mit der Einarbeitung des Statusregister in die Prüfsumme vorgenommen wird.

Für mögliche Speicher-Kopier-Angriffe werden zwei Typen betrachtet.

Bei dem Speicher-Kopier-Angriff Typ 1 wird der Angreifer eine modifizierte Prüfsummenberechnung, die im für den Prüfsummen-Programmcode ursprünglich vorgesehenen Speicherbereich abgelegt ist, über einer Kopie des ursprünglichen Prüfsummen-Programmcodes bzw. des Programmcodes des softwarebasierten Vertrauensankers, die an einem anderen Ort im Speicher abgelegt ist, ablaufen lassen. Da die ARM-Prozessorarchitektur Lade-Befehle mit einem Versatz (load instructions mit offset) ohne zusätzliche Prozessorzyklen erlaubt, ist es für den Angreifer einfach, einen Lade-Befehl ohne Versatz gegen einen Lade-Befehl mit Versatz auszutauschen ohne messbare Änderung der Abarbeitungszeit der Prüfsummenberechnung. Voraussetzung für einen solchen Versatz-Angriff (offset attack) ist, dass der Programmcode der ursprünglichen Prüfsummenberechnung bzw. des softwarebasierten Vertrauensankers in einem Speicherbereich abgelegt ist, der über den Versatz (Offset) des Lade-Befehls erreichbar ist. Der mögliche maximale Versatz ist von der Befehlscodierung abhängig. Um einem solchen Angriff vorzubeugen, wird Thumb-2 Kodierung verwendet, bei der der Ladebefehl ldr unterschiedliche Wortbreiten aufweisen kann, wobei die 16 Bit Kodierung (T1) lediglich einen Versatz im Bereich von 0 bis 124 in Vielfachen von Vier erlaubt. Dieser kleine Versatz reicht nicht aus, um die ursprüngliche entrollte Prüfsummenberechnung, die selbst 1 KiB groß ist, zu "überbrücken" und die Datenzugriffsoperationen auf eine dahinter liegende unmanipulierte Kopie des Vertrauensankers umzuleiten.

Falls der Angreifer auf 32 Bit Kodierung für den Versatz zurückgreift, um auf einen genügend weit entfernten Speicherbereich zugreifen zu können, so kommt es zu Abweichungen beim Programm-Zähler (PC) wodurch die Prüfsummenberechnung zu einem falschen Ergebnis führt. Die Abweichung des Programmzählers vergrößert sich mit jedem Kernblock der entrollten Hauptschleife der Prüfsummenberechnung und erreicht somit ihr Maximum im letzten der zehn Kernblöcke.

Um die Abweichung beim Programm-Zähler zu kompensieren, könnte der Angreifer versuchen den Programm-Zähler selbst zu manipulieren, was zu einem Speicher-Kopier-Angriff Typ 2 führt oder den zusätzlichen Versatz aufgrund der 32 Bit Kodierung durch kürzere Kodierung anderer Befehle ausgleichen. Um Letzteren entgegenzuwirken wird der softwarebasierte Vertrauensanker, insbesondere die Implementierung der Prüfsummenberechnung so platzeffizient wie möglich kodiert. Beispielsweise wird dies durch Nutzung von eors anstelle von eor erreicht die 16 statt 32 Bit breit sind aber die Logik des Codes in diesem speziellen Fall nicht verändern. Viele Befehle können nur in der kurzen 16 Bit Form kodiert werden, wenn die Operanden in der unteren Hälfte der Registerbank, Register r0 bis r7 gespeichert sind. Daher speichert der softwarebasierte Vertrauensanker häufig verwendete Variablen in der unteren Hälfte der Registerbank.

Bei einem Speicher Kopier Angriff Typ 2 hält der Angreifer eine Kopie des ursprünglichen Prüfsummen-Programmcodes bzw. des Programmcodes des softwarebasierten Vertrauensankers im ursprünglichen dafür vorgesehenen Speicherbereich, führt aber die Prüfsummenberechnung von einem anderen Speicherbereich aus durch. In einem solchen Fall sind drei Stellen im Code für den Angreifer zu berücksichtigen, da bei diesen der Programm-Zähler benutzt wird, der sich im Falle eines Angriffs ändern würde: In Zeile 7 des Assembler-Codes wird die Start- oder Basis-Adresse relativ zum Programmzähler berechnnet und der ursprüngliche Programmcode-Beginn muss daher für einen erfolgreichen Angriff in Reichweite des adr-Befehls liegen. Zusätzlich muss der Angreifer die Instruktionen in den Zeilen 9 oder/und 14 des Assembler-Codes, bei denen Programm-Zähler eingearbeitet wird so nachbilden, dass sie das gleiche Ergebnis produzieren wie wenn sie am ursprünglichen Ort ausgeführt werden, trotz des veränderten Programmzählers.

Ein Angreifer, der einen Speicher-Kopier-Angriff des Typs 2 implementiert, hat alle Freiheiten in Bezug auf Programmcodegröße und Befehlskodierung (ARM oder Thumb-2) da er den Programm-Zähler in jedem Fall fälschen muss. So ist es dem Angreifer möglich den ARM-Befehlssatz zu nutzen anstelle des Thumb-2 Befehlssatzes. Auch das Einarbeiten des Statusregisters in die Prüfsumme führt nicht zu einer Erkennung des aktuell verwendeten Befehlssatzes, da der mrs-Befehl die Besonderheit aufweist, dass er während der normalen Ausführung nicht die eigentlichen Prozessor-Status-Bits sondern stattdessen an diesen Stellen Null-Bits liest und somit keine Informationen über den aktuell ausgeführten Modus (ARM oder Thumb-2) liefern kann.

Für einen erfolgreichen Angriff, muss der Angreifer, wie oben beschrieben, an den beiden Stellen an denen der Programmzähler in die Prüfsumme eingeht (Zeilen 9 und 14 im Assembler-Code), diesen so nachbilden als würde der Vertrauensanker am ursprünglich vorgesehenen Ort im Speicher ausgeführt. Im Folgenden werden zwei Ansätze beschrieben, die ein Angreifer hierfür anwenden könnte.

Einfache Programm-Zähler Erzeugung: Der Angreifer könnte versuchen in den entsprechenden Operationen (Zeilen 9 und 14) den Programmzähler (PC) als Register durch einen dementsprechenden konstanten Zahlenwert zu ersetzen (Immediate), der direkt im Maschinencode des Befehls kodiert ist. Aufgrund der in der ARM-Architektur bestehenden Einschränkungen in Bezug auf konstanten zahlenwerten Operanden (Immediates), wäre ein solcher Angriff nur mit unrealistisch einfachen Adressen denkbar.

Da die Speicherposition des Programmcodes zur Prüfsummenberechnung vom Verifizierer vorgegeben wird, hat dieses Angriffsszenario keine Aussicht auf Erfolg.

Verschiebungs-Angriff: Dieser Angriffstyp basiert auf der Idee, den ursprünglichen Programm-Zähler durch Schiebeoperationen auf den aktuellen Programmzähler bei der Ausführung des Angreifercodes zu erzeugen. Dazu nutzt der Angreifer die in der Cortex-A8 ohne zusätzliche Kosten zusammen mit anderen Operationen ausführbaren Schiebeoperationen. Der Programmcode der manipulierten Prüfsummenberechnung wird so im Speicher positioniert, dass dessen Start-Adresse der Start-Adresse des ursprünglichen Programmcodes der Prüfsummenberechnung entspricht, lediglich um Eins logisch links verschoben. Auch wenn der Thumb-2 Befehlssatz kein Verschieben oder Rotieren des Programm-Zählers als zweiten Operator zusammen mit einer anderen Operation erlaubt, so steht es doch dem Angreifer frei den ARM-Befehlssatz zu verwenden, der das Verschieben und Addieren des Programm-Zählers innerhalb einer Operation erlaubt. Der Angreifer muss dazu den eigenen Programmcode zur Prüfsummenberechnung so anpassen, beispielsweise durch nop-Operationen, dass die verschobenen Programm-Zähler-Operationen und deren Einarbeitung in die Prüfsummenberechnung an den gleichen Speicherpositionen sind wie die des lediglich um Eins logisch rechts verschobenen Speicherpositionen des ursprünglichen Programmcodes. Der softwarebasierte Vertrauensanker beugt einem solchen Angriff vor, indem der originale (ursprüngliche) Programmcode in einen Speicherbereich abgelegt ist, dessen Adresse nicht durch ein einfaches logisches Rechtsverschieben erzeugt werden kann (die ARM Memory Management Unit MMU wird entsprechend konfiguriert). Eine grundlegende Eigenschaft einer geeigneten Start-Adresse ist, dass die beiden höchstwertigen Bits "10" sind. Einem Angriff wird auch dadurch begegnet, dass die Berechnung der Start-Adresse in der Teilfunktion B. (Berechnung der Speicheradresse) relativ zum Programmzähler ist und der Angreifer folglich entweder eine Verschiebe- und Subtraktions-Operation (immer zwei Befehle/Prozessorzyklen) um in die Reichweite des ursprünglichen Code-Starts zu kommen und dann den richtigen Wert zu errechnen oder eine Lade-Operation ausführen müsste um den richtigen Wert für den Programmzähler zu erhalten. Beide Varianten benötigen mindestens einen zusätzlichen Prozessorzyklus und sind damit durch eine längere Ausführungszeit detektierbar.

"Translation Lookaside Buffer" (TLB)-Desynchronisations Angriff: Bei diesem Angriff werden der DTLB und der ITLB derart desynchronisiert, dass die gleiche virtuelle Adresse auf eine manipulierte Kopie des Programmcodes der Prüfsummenberechnung im Instruction Translation Lookaside Buffer ITLB zeigt, aber auf ein Abbild des ursprünglichen Programmcodes der Prüfsummenberechnung im Data Translation Lookaside Buffer DTLB. So werden alle Befehle vom manipulierten Programmcode der Prüfsummenberechnung geladen, aber die expliziten load-Befehle, die zur Selbstüberprüfung des Programmcodes verwendet werden, greifen auf die an anderer Stelle im physikalischen Speicher abgelegte Kopie des ursprünglichen Programmcodes zurück. Im Ergebnis handelt es sich um einen quasi hardware-beschleunigten Speicher-Kopier-Angriff. Zum Schutz vor dem beschriebenen Angriffsszenario nutzt der softwarebasierte Vertrauensanker sich selbst modifizierenden Programm-Code, welcher auf den eigenen Programmcode über den Data Translation Lookaside Buffer zugreift und diesen spezifisch verändert. Die Adressen der so veränderten Befehle werden wiederum über den ITLB übersetzt wodurch eine Veränderung nur im Falle synchroner TLBs eine entsprechend korrekte Veränderung der Prüfsumme zur Folge hat. Eine Desynchronisation des TLB führt somit zu einer falschen Prüfsumme.

Beim softwarebasierten Vertrauensanker muss sichergestellt sein, dass ein Angreifer nicht in der Lage ist, *nach* einer erfolgreichen Berechnung der Prüfsumme die Kontrolle über die Ausführungsumgebung zu erlangen. Da er sonst mit Hilfe der korrekten Prüfsumme das Vertrauen des Verfifizierers erlangen und eigenen Programmcode ausführen könnte. Wie im vorigen Abschnitt zu den einzelnen Angriffen gezeigt, ist durch das Design der Prüfsummenberechnung sichergestellt, dass nur dann eine korrekte Prüfsumme berechnet werden kann wenn der Vertrauensanker in seiner unmanipulierten Form ausgeführt wird. Daher bleibt als einziger Angriffspunkt, um Kontrolle über die Ausführungsumgebung zu erlangen, das Auslösen einer Unterbrechung, d.h. eines asynchronen Interrupts. Der softwarebasierte Vertrauensanker schafft eine sichere Ausführungsumgebung dadurch, dass die Unterbrechungs-Vektor-Tabelle durch eine Vektor-Tabelle ersetzt wird, die Endlosschleifen enthält. Diese Tabelle ist in dem Speicherbereich abgelegt, über den die Prüfsumme berechnet wird und damit integritätsgeschützt und wird direkt nach der Prüfsummenberechnung, aber noch vor der Übertragung der Prüfsumme an den Verifizierer aktiviert. Code innerhalb des Speicherbereiches über den die Prüfsumme berechnet wird darf keine Unterbrechungen auslösen oder anderen Programmcode aufrufen, über den keine Prüfsumme berechnet wurde.

Außerdem muss sichergestellt werden, dass ein Angreifer keine Kontrolle über die Ausführungsumgebung erlangen kann, bevor eine sichere Ausführungsumgebung geschaffen wurde. Potentielle Zeitfenster für einen Angriff wären kurz nach der Berechnung der Prüfsumme oder die Zeit während der Berechnung der Prüfsumme. Daher muss für alle Arten von Ausnahmebedingungen sichergestellt sein, dass diese keine Angriffsfläche im eben beschriebenen Sinne darstellen:

Supervisor Call oder Undefinierte Befehle (Undefined Instruction and Supervisor Call): Hierbei handelt es sich um synchrone Unterbrechungen, die durch einen SVC Befehl oder einen unbekannten Befehl ausgelöst werden. Da sichergestellt ist, dass der Programmcode des softwarebasierten Vertrauensankers frei von Manipulationen ist und der Programmcode keinen SVC-Befehl und keine unbekannten Befehle enthält, gibt es keinen Angriffspunkt auf Basis von Supervisor Calls oder undefinierten Befehlen.

Interrupts (Unterbrechungen), Fast Interrupts und externe Speicherzugriffsfehler (IRQ, FIQ and external Abort): Externe Unterbrechungen werden durch den softwarebasierten Vertrauensanker ausgeschaltet und ihr Zustand geht über das Statusregister CPSR in die Prüfsumme ein.

Prefetch Speicherzugriffsfehler (Prefetch Abort): Diese Unterbrechung wird von der MMU (Memory Management Unit) initiiert, wenn Befehle von einer ungültig Speicheradresse geladen werden. Da sichergestellt wird, dass sowohl der Programmcode der Prüfsummenberechnung, als auch der Programmcode für die Initialisierung einer sicheren Ausführungsumgebung auf der gleichen minimal großen Speicherseite abgelegt sind, kann ein Prefetch Speicherzugriffsfehler nicht auftreten.

Daten Speicherzugriffsfehler (Data Abort): Diese Unterbrechung wird von der MMU (Memory Management Unit) initiiert, wenn auf unzulässige Speicheradressen durch explizite Datenzugriffsoperationen zugegriffen wird. Da der von der Prüfsummenberechnung abgedeckte Speicherbereich circa 8KiB (also zwei minimal große Speicherseiten) groß ist, könnte eine Daten-Unterbrechung von einem Angreifer während der Berechnung der Prüfsumme ausgelöst werden. Da die Prüfsummenberechung zu diesem Zeitpunkt noch nicht abgeschlossen ist und die Abarbeitung der im Rahmen der Unterbrechung ausgelösten Befehle lange benötigt, im Vergleich zur Ausführungszeit eines Kernblocks, wird die Manipulation detektiert und kann vom Angreifer nicht ausgenutzt werden.

### Liste der Bezugszeichen

- 1: Initialisierungsprozess, Bootprozess
- 10: softwarebasierter Vertrauensanker
- 10a,...,n: Teilprozess
- 20: Teilprozessaufruf durch softwarebasierten Vertrauensanker
- 20a,b: Teilprozessaufruf
- 21: Kommunikationskanal/Kommunikationsschnittstelle
- 22: Verifikation durch den softwarebasierten Vertrauensanker (zum Beispiel durch Berechnung und Prüfung eines Hash, Prüfung einer Signatur)
- 2: Verifizierer
- 4: Kernblock
- 5: Sichere Ausführungsumgebung
- 6: Kopie oder Simmulationsmodell des softwarebasierten Vertrauensankers
- 7: Gespeicherte Geheimnisse, beispielsweise private Schlüssel und/oder Hash des softwarebasierten Vertrauensankers und/oder folgender Teilprozesse
- 30: Kommunikation: Anfrage
- 31: Kommunikation: Aufgabe
- 32: Zeitbedarf: Prüfsummenberechnung
- 33: Zeitmessung des Zeitbedarfs zur Kommunikation der Aufgabe, Prüfsummenberechnung und Kommunikation der Antwort
- 34: Kommunikation: Antwort
- 35: Kommunikation: Daten
- 36: Kommunikation, Breitstellen oder Zugriff gewähren auf ein Geheimnis oder mehrere Geheimnisse oder Operationen die Geheimnisse nutzen
- 40: zur Prüfsummenberechnung zu lesende Speicherdaten, entspricht Datensatz oder Teil des Datensatzes
- 41: Vorberechnetes Aufgabe-Antwort-Wertepaar oder ausgewählte oder erzeugte Aufgabe, insbesondere eine zufällig ausgewählte oder erzeugte Aufgabe
- 50: Funktion, Methode, Initialisierung
- 51: Funktion, Methode: Berechnung der Antwort
- 52: Funktion, Methode: Epilog
- 53: Funktion, Methode: Kommunikation
- 54: Funktion, Methode: Hash
- 100: Verifizierter softwarebasierter Vertrauensanker
- 110: Computer
- 120: Freigabevorrichtung

## Patentansprüche

1. Verfahren zum Initialisieren eines Computers (110) mit den Schritten:
a. Aufrufen (20b) eines softwarebasierten Vertrauensankers (10);
b. Anfragen (30) einer Aufgabe von einem Verifizierer (2);
c. Bereitstellen (31) der Aufgabe durch den Verifizierer (2), berechnen (32) einer Antwort zur bereitgestellten Aufgabe durch den softwarebasierten Vertrauensanker (10) und Übermittlung (34) der Antwort an den Verifizierer (2);
d. Vergleichen der übermittelten (34) Antwort zur bereitgestellten (31) Aufgabe mit einer Vorhersage der Antwort durch den Verifizierer (2) und
e. Aufrufen und Ausführen (20) eines nachfolgenden Teilprozesses (10c) oder nachfolgender Teilprozesse (10c,..,n) des Initialisierungsprozesses (1) unter Nutzung von durch den Verifizierer (2) bereitgestellten (36) Geheimnissen oder Operationen, die Geheimnisse nutzen, falls die vom softwarebasierten Vertrauensanker (10) übermittelte (34) Antwort mit der Vorhersage der Antwort übereinstimmt.

2. Verfahren zum Initialisieren eines Computers (110) gemäß dem vorhergehenden Anspruch, **dadurch gekennzeichnet, dass**
- der Verifizierer (2) die Bearbeitungszeit des Verfahrensschrittes c misst (33),
- der Verifizierer (2) die gemessene Bearbeitungszeit des Verfahrensschrittes c mit einem Zeitschwellwert vergleicht,
- der Verifizierer gemäß dem Verfahrensschritt e die Geheimnisse oder Operationen nur dann bereitstellt (36), wenn die gemessene (33) Bearbeitungszeit kleiner als der Zeitschwellwert ist.

3. Verfahren nach Anspruch 1 oder 2, **dadurch gekennzeichnet, dass** der Verifizierer (2) den Zeitschwellwert auf Basis eines Modells (6) des Computers und des softwarebasierten Vertrauensankers (10) berechnet.

4. Verfahren nach einem der Ansprüche 1 bis 3, **dadurch gekennzeichnet, dass** das Modell zumindest eine auf dem Verifizierer (2) gespeicherte Kopie des originalen Programmcodes des softwarebasierten Vertrauensankers (10) enthält.

5. Verfahren nach einem der Ansprüche 1 bis 4, **dadurch gekennzeichnet, dass** im Verifizierer (2) ein vorberechneter Vorhersagewert zur Antwort und/oder zum Zeitschwellwert gespeichert ist.

6. Verfahren nach einem der Ansprüche 1 bis 5, **dadurch gekennzeichnet, dass** zur Berechnung (32) der Antwort zur bereitgestellten (31) Aufgabe der softwarebasierte Vertrauensanker (10) eine Prüfsumme über zumindest Teile des Programmcodes oder den gesamten Programmcode des softwarebasierten Vertrauensankers (10) berechnet.

7. Verfahren nach einem der Ansprüche 1 bis 6, **dadurch gekennzeichnet, dass** der nachfolgende Teilprozess (10c) oder die nachfolgenden Teilprozesse (10c,..,n) des Initialisierungsprozesses (1) nur dann ausführbar aufgerufen wird, wenn die vom softwarebasierten Vertrauensanker (10) an den Verifizierer (2) übermittelten (35) Daten vom Verifizierer (2) erwartete Werte aufweisen.

8. Verfahren nach einem der Ansprüche 1 bis 7, **dadurch gekennzeichnet, dass** der Verifizierer ein Geheimnis an den softwarebasierte Vertrauensanker (10) übermittelt (36), falls die Bedingung aus dem Verfahrensschritt e erfüllt ist, und der softwarebasierte Vertrauensanker (10) unter Nutzung des vom Verifizierer (2) bereitgestellten (36) Geheimnisses einen nachfolgenden durch Verschlüsselung gesicherten Teilprozess (10c) ausführbar aufruft.

9. Verfahren nach einem der Ansprüche 1 bis 7, **dadurch gekennzeichnet, dass** der Verifizierer Operationen bereitstellt, die ein im Verifizierer (2) gespeichertes Geheimnis nutzen und der softwarebasierte Vertrauensanker (10) unter Nutzung der Operationen einen nachfolgenden durch Verschlüsselung gesicherten Teilprozess (10c) ausführbar aufruft, falls die vom softwarebasierten Vertrauensanker (10) übermittelte (34) Antwort mit der Vorhersage der Antwort übereinstimmt.

10. Verfahren nach einem der Ansprüche 1 bis 7, **dadurch gekennzeichnet, dass** der softwarebasierte Vertrauensanker (10) durch Verschlüsselung geschützte Daten an den Verifizierer (2) übermittelt, der Verifizierer (2) unter Nutzung eines Geheimnisses die übermittelten Daten entschlüsselt, der Verifizierer (2) die entschlüsselten Daten an den softwarebasierte Vertrauensanker (10) übermittelt und der softwarebasierte Vertrauensanker (10) unter Nutzung der entschlüsselten Daten einen nachfolgenden Teilprozess (10c) ausführbar aufruft, falls die vom softwarebasierten Vertrauensanker (10) übermittelte (34) Antwort mit der Vorhersage der Antwort übereinstimmt.

11. Computerprogrammprodukt mit von einem Computer ausführbaren Befehlen zur Durchführung eines Verfahrens nach einem der Ansprüche 1 bis 10.

12. Vorrichtung zur Durchführung des Verfahrens nach einem der Ansprüche 1 bis 10 aufweisend zumindest einen Computer (110) mit einem softwarebasierten Vertrauensanker (10) und einen über eine Kommunikationsschnittstelle (21) verbundenen Verifizierer (2), **dadurch gekennzeichnet, dass** der Verifizierer (2) ein Sicheres Element ist oder ein solches enthält, wobei das Sichere Element eingerichtet ist, eine Bearbeitungszeit (33) des Computers (110) zu messen und bei Unterschreiten eines Zeitschwellwertes Zugriff auf Geheimnisse zu gewähren oder Operationen unter Nutzung von Geheimnissen bereitzustellen.

13. Vorrichtung nach Anspruch 12, **dadurch gekennzeichnet, dass** das Sichere Element mit einer Freigabevorrichtung (120) verbunden ist oder eine Freigabevorrichtung aufweist.
